# EUROPEAN PATENT APPLICATION

(11) **EP 4 460 098 A1**
(43) Date of publication of application: **06.11.2024**
(21) Application number: 22915504.9
(22) Date of filing: 27.10.2022
(51) Int. Cl.: H04W 48/16, H04W 72/0457, H04W 76/15, H04W 76/20, H04W 92/20

(54) **WIRELESS ACCESS NETWORK NODE, USER EQUIPMENT, AND METHOD THEREFOR**

(30) Priority: 28.12.2021 JP 2021215149
(71) Applicant: NEC Corporation, 108-8001 Tokyo (JP)
(72) Inventor: FUTAKI Hisashi, Tokyo 108-8001 (JP); HAYASHI Sadafuku, Tokyo 108-8001 (JP)
(74) Representative: MacDougall, Alan John Shaw
(86) International application number: PCT/JP2022/040268
(87) International publication number: WO 2023/127271

(57) **Abstract**

A Master Node (MN) (1) sends a control message to a candidate Secondary Node (SN) (4). The control message indicates that one or more candidate PSCells are to be prepared by the candidate SN for a first conditional mobility with addition or change of a PSCell for a UE (3). In addition, the control message indicates that a mode of operation is recommended in which configurations of the one or more candidate PSCells to be provided to the UE (3) for the first conditional mobility are reused by the UE (3) for a subsequent conditional PSCell change after the first conditional mobility. This can help, for example, to implement a feature or mode of operation that enables a subsequent second conditional mobility without reconfiguration or reinitialization by the network after a first conditional mobility.

## Description

### Technical Field

The present disclosure relates to radio communication systems, and in particular to conditional mobility of a radio terminal.

### Background Art

The 3rd Generation Partnership Project (3GPP (registered trademark)) Release 16 supports Conditional Handover (CHO) and Conditional Primary Secondary Cell Group (SCG) Cell (PSCell) Change (CPC) (see, for example, Non-Patent Literature 1 and 2). CPC in 3GPP Release 16 is intra-SN CPC without Master Node (MN) involvement and supports conditional PSCell change within a single SN from a source PSCell to any of one or more candidate cells (i.e., candidate PSCells). This CPC is also referred to SN-initiated Conditional SN Modification without MN involvement.

The 3GPP Radio Access Network (RAN) Working Group is currently considering enhancements to conditional mobility to be introduced in 3GPP Release 17 (see, for example, Non-Patent Literature 3). The new conditional mobility to be introduced in 3GPP Release 17 includes Conditional PSCell Addition (CPA) and inter-SN CPC. CPA is also referred to as conditional SN addition, and inter-SN CPC is also referred to as conditional SN change. Inter-SN CPC or conditional SN change is initiated by the MN or the source SN.

In addition, further mobility enhancements are being discussed for 3GPP Release 18, including "Multi-Radio Dual Connectivity (MR-DC) with selective activation of cell groups" (see, for example, Non-Patent Literature 4 and 5). In Release 17 CPA and CPC, the UE is required to release any unused (unselected) CPC/CPA configuration in response to selecting one of the candidate target PSCells and performing random access to the selected target PSCell. Thus, the UE has no way to perform subsequent CPCs without being reconfigured and reinitialized by the network. "Multi-Radio Dual Connectivity (MR-DC) with selective activation of cell groups" aims to address this problem. Specifically, according to Non-Patent Literature 5, MR-DC with selective activation of cell groups is intended to enable subsequent CPC/CPA without reconfiguration and reinitialization of the CPC/CPA preparation by the network after the SCG is changed, thereby reducing CPC/CPA signaling overhead and interruption time.

### Citation List

### Non Patent Literature

[Non-Patent Literature 1] 3GPP TS 38.300 V16.7.0 (2021-09), "3rd Generation Partnership Project; Technical Specification Group Radio Access Network; NR; NR and NG-RAN Overall Description; Stage 2, (Release 16)", September 2021
[Non-Patent Literature 2]3GPP TS 37.340 V16.7.0 (2021-09), "3rd Generation Partnership Project; Technical Specification Group Radio Access Network; Evolved Universal Terrestrial Radio Access (E-UTRA) and NR; Multi-connectivity; Stage 2 (Release 16)", September 2021
[Non-Patent Literature 3] CATT, "Introduction of CPA and inter-SN CPC", R2-2111640, 3GPP TSG-RAN WG2 Meeting #116-e, November 1-12, 2021
[Non-Patent Literature 4] MediaTek, "Moderator's summary of discussion for [94e-14-R18-MobEnh]", RP-213541, 3GPP TSG RAN Meeting #94e, December 6-17, 2021
[Non-Patent Literature 5] MediaTek, "New WID on Further NR mobility enhancements", RP-213565, 3GPP TSG RAN Meeting #94e, December 6-17, 2021

### Summary of Invention

### Technical Problem

The inventors have studied mechanisms and procedures for implementing a feature or mode of operation referred to as "Multi-Radio Dual Connectivity (MR-DC) with selective activation of cell groups" and have identified various problems.

One of these problems relates to the clarification of various procedures for a feature or mode of operation referred to as "Multi-Radio Dual Connectivity (MR-DC) with selective activation of cell groups". Currently, the procedures for enabling this feature or mode of operation are not clear. For example, it is not clear which node (e.g., MN, source SN, or candidate SN) makes the decision to use this feature or mode of operation, and when that decision is made.

Another one of these problems relates to the reuse of multiple candidate PSCell configurations for a CPA or inter-SN CPC (or conditional SN change) in a subsequent CPC. The candidate PSCell configuration may be a cell group (CG) configuration, an SCG configuration, or an SCG radio resource configuration. For example, it is not clear which of the multiple candidate PSCell configurations for CPA or Inter-SN CPC (or conditional SN change) the UE will reuse for subsequent CPCs.

Still another of these problems concerns the implementation of a feature or mode of operation similar to "Multi-Radio Dual Connectivity (MR-DC) with selective activation of cell groups" in a CHO. For example, after a UE has performed a first CHO from a source cell to one of the candidate target cells, allowing the UE to perform a subsequent second CHO without reconfiguration or reinitialization of the CHO preparation by the network may contribute to mobility enhancements. However, the mechanisms and procedures for implementing such a feature or mode of operation for CHO are not clear at this time.

One of the objects to be achieved by the example embodiments disclosed herein is to provide apparatuses, methods, and programs that contribute to solving at least one of a plurality of problems, including the problems described above, related to implementing a feature or mode of operation that enables a subsequent second conditional mobility without reconfiguration or reinitialization from the network after a first conditional mobility. It should be noted that this object is merely one of the objects to be achieved by the example embodiments disclosed herein. Other objects or problems and novel features will become apparent from the following description and the accompanying drawings.

### Solution to Problem

A first aspect is directed to a RAN node configured to operate as a Master Node (MN) associated with a Master Cell Group (MCG) in dual connectivity for a User Equipment (UE). The RAN node includes at least one memory and at least one processor coupled to the at least one memory. The at least one processor is configured to send a control message to a candidate Secondary Node (SN). The control message indicates that for a first conditional mobility with addition or change of a primary secondary cell group (SCG) cell (PSCell) for the UE, one or more candidate PSCells are to be prepared by the candidate SN. In addition, the control message indicates that a mode of operation is recommended in which configurations of the one or more candidate PSCells to be provided to the UE for the first conditional mobility are reused by the UE for a subsequent conditional PSCell change after the first conditional mobility.

A second aspect is directed to a method performed by a RAN node configured to operate as an MN associated with an MCG in dual connectivity for a UE. The method includes sending a control message to a candidate SN. The control message indicates that one or more candidate PSCells are to be prepared by the candidate SN for a first conditional mobility with addition or change of a PSCell for the UE. In addition, the control message indicates that a mode of operation is recommended in which configurations of the one or more candidate PSCells to be provided to the UE for the first conditional mobility are reused by the UE for a subsequent conditional PSCell change after the first conditional mobility.

A third aspect is directed to a RAN node configured to operate as a source SN associated with an SCG in dual connectivity for a UE. The RAN node includes at least one memory and at least one processor coupled to the at least one memory. The at least one processor is configured to send a control message to an MN of the dual connectivity. The control message indicates one or more candidate PSCells recommended by the source SN for a first conditional PSCell change for the UE. In addition, the control message indicates that a mode of operation is recommended in which configurations of the one or more candidate PSCells to be provided to the UE for the first PSCell change are reused by the UE for a subsequent conditional PSCell change after the first PSCell change.

A fourth aspect is directed to a method performed by a RAN node configured to operate as a source SN associated with an SCG in dual connectivity for a UE. The method includes sending a control message to an MN of the dual connectivity. The control message indicates one or more candidate PSCells recommended by the source SN for a first conditional PSCell change for the UE. In addition, the control message indicates that a mode of operation is recommended in which configurations of the one or more candidate PSCells to be provided to the UE for the first PSCell change are reused by the UE for a subsequent conditional PSCell change after the first PSCell change.

A fifth aspect is directed to a RAN node configured to operate as a candidate SN associated with an SCG in dual connectivity for a UE. The RAN node includes at least one memory and at least one processor coupled to the at least one memory. The at least one processor is configured to receive a first control message from an MN of the dual connectivity and to send a second control message to the MN in response to the first control message. The first control message indicates that one or more candidate PSCells are to be prepared for a first conditional mobility with addition or change of a PSCell for the UE. Meanwhile, the second control message indicates at least one candidate PSCell prepared by the candidate SN among the one or more candidate PSCells. In addition, the second control message indicates that a mode of operation is recommended in which a configuration of the at least one candidate PSCell to be provided to the UE for the first conditional mobility is reused by the UE for a subsequent conditional PSCell change after the first conditional mobility.

A sixth aspect is directed to a method performed by a RAN node configured to operate as a candidate SN associated with an SCG in dual connectivity for a UE. The method includes receiving a first control message from an MN of the dual connectivity and sending a second control message to the MN in response to the first control message. The first control message indicates that one or more candidate PSCells are to be prepared for a first conditional mobility with addition or change of a PSCell for the UE. Meanwhile, the second control message indicates at least one candidate PSCell prepared by the candidate SN among the one or more candidate PSCells. The second control message also indicates that a mode of operation is recommended in which a configuration of the at least one candidate PSCell to be provided to the UE for the first conditional mobility is reused by the UE for a subsequent conditional PSCell change after the first conditional mobility.

A seventh aspect is directed to a RAN node configured to operate as a candidate SN associated with an SCG in dual connectivity for a UE. The RAN node includes at least one memory and at least one processor coupled to the at least one memory. The at least one processor is configured to prepare one or more candidate PSCells in a first conditional mobility with addition or change of a PSCell for the UE. The at least one processor is also configured to transmit an SN Radio Resource Control (RRC) message to the UE when one of the one or more candidate PSCells is selected by the UE. The SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

An eighth aspect is directed to a method performed by a RAN node configured to operate as a candidate SN associated with an SCG in dual connectivity for a UE. The method includes (a) preparing one or more candidate PSCells in a first conditional mobility with addition or change of a PSCell for the UE, and (b) transmitting an SN Radio Resource Control (RRC) message to the UE when one of the one or more candidate PSCells is selected by the UE. The SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

A ninth aspect is directed to a RAN node configured to operate as a source node for a conditional handover of a UE. The RAN node includes at least one memory and at least one processor coupled to the at least one memory. The at least one processor is configured to send a control message to a candidate target node. The control message indicates that one or more candidate target cells are to be prepared by the candidate target node for a first conditional handover of the UE. In addition, the control message indicates that a mode of operation is recommended in which configurations of the one or more candidate target cells to be provided to the UE for the first conditional handover are reused by the UE for a subsequent second conditional handover after the first conditional handover.

A tenth aspect is directed to a method performed by a RAN node configured to operate as a source node for a conditional handover of a UE. The method includes sending a control message to a candidate target node. The control message indicates that one or more candidate target cells are to be prepared by the candidate target node for a first conditional handover of the UE. In addition, the control message indicates that a mode of operation is recommended in which configurations of the one or more candidate target cells to be provided to the UE for the first conditional handover are reused by the UE for a subsequent second conditional handover after the first conditional handover.

An eleventh aspect is directed to a RAN node configured to operate as a candidate target node for a conditional handover of a UE. The RAN node includes at least one memory and at least one processor coupled to the at least one memory. The at least one processor is configured to receive a first control message from a source node and to send a second control message to the source node in response to the first control message. The first control message indicates that one or more candidate target cells are to be prepared for a first conditional handover for the UE. Meanwhile, the second control message indicates at least one candidate target cell prepared by the source node among the one or more candidate target cells. The second control message also indicates that a mode of operation is recommended in which a configuration of the at least one candidate target cell to be provided to the UE for the first conditional handover is reused by the UE for a subsequent second conditional handover after the first conditional handover.

A twelfth aspect is directed to a method performed by a RAN node configured to operate as a candidate target node for a conditional handover of a UE. The method includes receiving a first control message from a source node and sending a second control message to the source node in response to the first control message. The first control message indicates that one or more candidate target cells are to be prepared for a first conditional handover for the UE. Meanwhile, the second control message indicates at least one candidate target cell prepared by the source node among the one or more candidate target cells. The second control message also indicates that a mode of operation is recommended in which a configuration of the at least one candidate target cell to be provided to the UE for the first conditional handover is reused by the UE for a subsequent second conditional handover after the first conditional handover.

A thirteenth aspect is directed to a RAN node configured to operate as a candidate target node for a conditional handover of a UE. The RAN node includes at least one memory and at least one processor coupled to the at least one memory. The at least one processor is configured to prepare one or more candidate target cells for a first conditional handover of the UE. The at least one processor is also configured to transmit an RRC message to the UE when one of the one or more candidate target cells is selected by the UE. The RRC message indicates that a mode of operation is recommended in which configurations of one or more other candidate target cells, other than the selected candidate target cells, prepared for the first conditional handover are reused by the UE for a subsequent second conditional handover after the first conditional handover.

A fourteenth aspect is directed to a method performed by a RAN node configured to operate as a candidate target node for a conditional handover of a UE. The method includes (a) preparing one or more candidate target cells for a first conditional handover of the UE, and (b) transmitting an RRC message to the UE when one of the one or more candidate target cells is selected by the UE. The RRC message indicates that a mode of operation is recommended in which configurations of one or more other candidate target cells, other than the selected candidate target cells, prepared for the first conditional handover are reused by the UE for a subsequent second conditional handover after the first conditional handover.

A fifteenth aspect is directed to a UE. The UE includes at least one memory and at least one processor coupled to the at least one memory. The at least one processor is configured to receive, from an MN, configurations of a plurality of candidate PSCells provided by a plurality of candidate SNs for a first conditional mobility with addition or change of a PSCell for the UE. The at least one processor is configured to, if an execution condition for one of the plurality of candidate PSCells is met, apply the configuration corresponding to the one candidate PSCell. The at least one processor is also configured to selectively maintain, for a subsequent conditional PSCell change after the first conditional mobility, only the configurations of one or more other candidate PSCells provided by a selected candidate SN providing the one candidate PSCell.

A sixteenth aspect is directed to a method performed by a UE. The method includes the steps of:
(a) receiving, from an MN, configurations of a plurality of candidate PSCells provided by a plurality of candidate SNs for a first conditional mobility with addition or change of a PSCell for the UE;
(b) if an execution condition for one of the plurality of candidate PSCells is met, applying the configuration corresponding to the one candidate PSCell; and
(c) selectively maintaining, for a subsequent conditional PSCell change after the first conditional mobility, only the configurations of one or more other candidate PSCells provided by a selected candidate SN providing the one candidate PSCell.

A seventeenth aspect is directed to a UE. The UE includes at least one memory and at least one processor coupled to the at least one memory. The at least one processor is configured to receive, from an MN, configurations of a plurality of candidate PSCells for a first conditional mobility with addition or change of a PSCell for the UE. The at least one processor is configured to, if an execution condition for one of the plurality of candidate PSCells is met, apply the configuration corresponding to the one candidate PSCell. The at least one processor is also configured to selectively maintain, for a subsequent conditional PSCell change after the first conditional mobility, the configurations of one or more candidate PSCells among the plurality of candidate PSCells other than the one candidate PSCell, as specified by the MN or one or more candidate SNs.

An eighteenth aspect is directed to a method performed by a UE. The method includes the steps of:
(a) receiving, from an MN, configurations of a plurality of candidate PSCells for a first conditional mobility with addition or change of a PSCell for the UE;
(b) if an execution condition for one of the plurality of candidate PSCells is met, applying the configuration corresponding to the one candidate PSCell; and
(c) selectively maintaining, for a subsequent conditional PSCell change after the first conditional mobility, the configurations of one or more candidate PSCells among the plurality of candidate PSCells other than the one candidate PSCell, as specified by the MN or one or more candidate SNs.

A nineteenth aspect is directed to a RAN node configured to operate as a candidate SN associated with an SCG in dual connectivity for a UE. The RAN node includes at least one memory and at least one processor coupled to the at least one memory. The at least one processor is configured to indicate to an MN one or more candidate PSCells prepared by the candidate SN for a first conditional mobility involving addition or change of a PSCell for the UE. The at least one processor is also configured to indicate to the MN at least one candidate PSCell among the one or more candidate PSCells whose configuration is to be maintained for a subsequent conditional PSCell change after the first conditional mobility.

A twentieth aspect is directed to a method performed by a RAN node configured to operate as a candidate SN associated with an SCG in dual connectivity for a UE. The method includes the steps of:
(a) indicating to an MN one or more candidate PSCells prepared by the candidate SN for a first conditional mobility involving addition or change of a PSCell for the UE; and
(b) indicating to the MN at least one candidate PSCell among the one or more candidate PSCells whose configuration is to be maintained for a subsequent conditional PSCell change after the first conditional mobility.

A twenty-first aspect is directed to a RAN node configured to operate as an MN associated with an MCG in dual connectivity for a UE. The RAN node includes at least one memory and at least one processor coupled to the at least one memory. The at least one processor is configured to receive a control message from a first candidate SN of a first conditional mobility with addition or change of a PSCell for the UE. The control message indicates one or more candidate PSCells prepared by the first candidate SN for the first conditional mobility. The control message also indicates at least one candidate PSCell among the one or more candidate PSCells whose configuration is to be maintained for a subsequent conditional PSCell change after the first conditional mobility.

A twenty-second aspect is directed to a method performed by a RAN node configured to operate as an MN associated with an MCG in dual connectivity for a UE. The method includes receiving a control message from a first candidate SN of a first conditional mobility with addition or change of a PSCell for the UE. The control message indicates one or more candidate PSCells prepared by the first candidate SN for the first conditional mobility. The control message also indicates at least one candidate PSCell among the one or more candidate PSCells whose configuration is to be maintained for a subsequent conditional PSCell change after the first conditional mobility.

A twenty-third aspect is directed to a UE. The UE includes at least one memory and at least one processor coupled to the at least one memory. The at least one processor is configured to receive, from a source node, configurations of a plurality of candidate target cells provided by a plurality of candidate target nodes for a first conditional handover for the UE. The at least one processor is configured to, if an execution condition for one of the plurality of candidate target cells is met, apply the configuration corresponding to the one candidate target cell. The at least one processor is also configured to selectively maintain, for a subsequent second conditional handover after the first conditional handover, only the configurations of one or more other candidate target cells provided by a selected candidate target node providing the one candidate target cell.

A twenty-fourth aspect is directed to a method performed by a UE. The method includes the steps of:
(a) receiving, from a source node, configurations of a plurality of candidate target cells provided by a plurality of candidate target nodes for a first conditional handover for the UE;
(b) if an execution condition for one of the plurality of candidate target cells is met, applying the configuration corresponding to the one candidate target cell; and
(c) selectively maintaining, for a subsequent second conditional handover after the first conditional handover, only the configurations of one or more other candidate target cells provided by a selected candidate target node providing the one candidate target cell, for a subsequent second conditional handover after the first conditional handover.

A twenty-fifth aspect is directed to a UE. The UE includes at least one memory and at least one processor coupled to the at least one memory. The at least one processor is configured to receive, from a source node, configurations of a plurality of candidate target cells for a first conditional handover for the UE. The at least one processor is configured to, if an execution condition for one of the plurality of candidate target cells is met, apply the configuration corresponding to the one candidate target cell. The at least one processor is also configured to selectively maintain, for a subsequent second conditional handover after the first conditional handover, the configurations of one or more candidate target cells among the plurality of candidate target cells other than the one target cell, as specified by the source node or one or more candidate nodes.

A twenty-sixth aspect is directed to a method performed by a UE. The method includes the steps of:
(a) receiving, from a source node, configurations of a plurality of candidate target cells for a first conditional handover for the UE;
(b) if an execution condition for one of the plurality of candidate target cells is met, applying the configuration corresponding to the one candidate target cell; and
(c) selectively maintaining, for a subsequent second conditional handover after the first conditional handover, the configurations of one or more candidate target cells among the plurality of candidate target cells other than the one target cell, as specified by the source node or one or more candidate nodes.

A twenty-seventh aspect is directed to a RAN node configured to operate as a candidate target node for a conditional handover of a UE. The RAN node includes at least one memory and at least one processor coupled to the at least one memory. The at least one processor is configured to indicate to a source node one or more candidate target cells prepared by the candidate target node for a first conditional handover for the UE. The e at least one processor is also configured to indicate to the source node at least one candidate target cell among the one or more candidate target cells whose configuration is to be maintained for a subsequent second conditional handover after the first conditional handover.

A twenty-eighth aspect is directed to a method performed by a RAN node configured to operate as a candidate target node for a conditional handover of a UE. The method includes the steps of:
(a) indicating to a source node one or more candidate target cells prepared by the candidate target node for a first conditional handover for the UE; and
(b) indicating to the source node at least one candidate target cell among the one or more candidate target cells whose configuration is to be maintained for a subsequent second conditional handover after the first conditional handover.

A twenty-ninth aspect is directed to a RAN node configured to operate as a source node for a conditional handover of a UE. The RAN node includes at least one memory and at least one processor coupled to the at least one memory. The at least one processor is configured to receive a control message from a first candidate target node of a first conditional handover for the UE. The control message indicates one or more candidate target cells prepared by the first candidate target node for the first conditional handover. The control message also indicates at least one candidate target cell among the one or more candidate target cells whose configuration is to be maintained for a subsequent second conditional handover after the first conditional handover.

A thirtieth aspect is directed to a method performed by a RAN node configured to operate as a source node for a conditional handover of a UE. The method includes receiving a control message from a first candidate target node of a first conditional handover for the UE. The control message indicates one or more candidate target cells prepared by the first candidate target node for the first conditional handover. The control message also indicates at least one candidate target cell among the one or more candidate target cells whose configuration is to be maintained for a subsequent second conditional handover after the first conditional handover.

A thirty-first aspect is directed to a program. The program includes a set of instructions (software codes) that, when loaded into a computer, cause the computer to perform the method according to any of the aspects described above.

### Advantageous Effects of Invention

According to the above-described aspects, it is possible to provide apparatuses, methods, and programs that contribute to solving at least one of a plurality of problems related to implementing a feature or mode of operation that allows a subsequent second conditional mobility without reconfiguration or reinitialization from the network after a first conditional mobility.

### Brief Description of Drawings

Fig. 1 shows an example configuration of a radio communication system according to an example embodiment;
Fig. 2 shows an example configuration of a radio communication system according to an example embodiment;
Fig. 3 shows an example configuration of a radio communication system according to an example embodiment;
Fig. 4 shows an example configuration of a RAN node according to an example embodiment;
Fig. 5 is a flowchart showing an example of the operation of a RAN node (i.e., MN) according to an example embodiment;
Fig. 6 is a flowchart showing an example of the operation of a RAN node (i.e., source SN) according to an example embodiment;
Fig. 7 is a flowchart showing an example of the operation of a RAN node (i.e., candidate (target) SN) according to an example embodiment;
Fig. 8 is a flowchart showing an example of the operation of a RAN node (i.e., candidate (target) SN) according to an example embodiment;
Fig. 9 is a sequence diagram showing an example of signaling regarding inter-SN CPC (or conditional SN change) according to an example embodiment;
Fig. 10 is a sequence diagram showing an example of signaling regarding inter-SN CPC (or conditional SN change) according to an example embodiment;
Fig. 11 is a sequence diagram showing an example of signaling regarding inter-SN CPC (or conditional SN change) according to an example embodiment;
Fig. 12 is a sequence diagram showing an example of signaling regarding inter-SN CPC (or conditional SN change) according to an example embodiment;
Fig. 13 is a flowchart showing an example of the operation of a UE according to an example embodiment;
Fig. 14 is a flowchart showing an example of the operation of a UE according to an example embodiment;
Fig. 15 is a sequence diagram showing an example of signaling regarding inter-SN CPC (or conditional SN change) according to an example embodiment;
Fig. 16 is a flowchart showing an example of the operation of a RAN node (i.e., a source node of a CHO) according to an example embodiment;
Fig. 17 is a flowchart showing an example of the operation of a RAN node (i.e., a candidate target node of a CHO) according to an example embodiment;
Fig. 18 is a flowchart showing an example of the operation of a RAN node (i.e., a candidate target node of a CHO) according to an example embodiment;
Fig. 19 is a sequence diagram showing an example of signaling regarding a CHO according to an example embodiment;
Fig. 20 is a sequence diagram showing an example of signaling regarding a CHO according to an example embodiment;
Fig. 21 is a flowchart showing an example of the operation of a UE according to an example embodiment;
Fig. 22 is a flowchart showing an example of the operation of a UE according to an example embodiment;
Fig. 23 is a sequence diagram showing an example of signaling regarding a CHO according to an example embodiment;
Fig. 24 is a block diagram showing an example configuration of a RAN node according to an example embodiment; and
Fig. 25 is a block diagram showing an example configuration of a UE according to an example embodiment.

### Example Embodiment

Specific example embodiments will be described hereinafter in detail with reference to the drawings. The same or corresponding elements are denoted by the same symbols throughout the drawings, and duplicated explanations are omitted as necessary for the sake of clarity.

Each of the example embodiments described below may be used individually, or two or more of the example embodiments may be appropriately combined with one another. These example embodiments include novel features different from each other. Accordingly, these example embodiments contribute to attaining objects or solving problems different from one another and contribute to obtaining advantages different from one another.

The example embodiments presented below are primarily described for the 3GPP Long Term Evolution (LTE) system and the 5th generation mobile communication system (5G system). However, these example embodiments can be applied to other radio communication systems that support technologies similar to 3GPP multi-connectivity (e.g., Dual Connectivity). The term LTE as used in this specification includes enhancements and developments of LTE and LTE-Advanced to enable interworking with the 5G system, unless otherwise noted.

As used in this specification, "if" can be interpreted to mean "when", "at or around the time", "after", "upon", "in response to determining", "in accordance with a determination", or "in response to detecting", depending on the context.

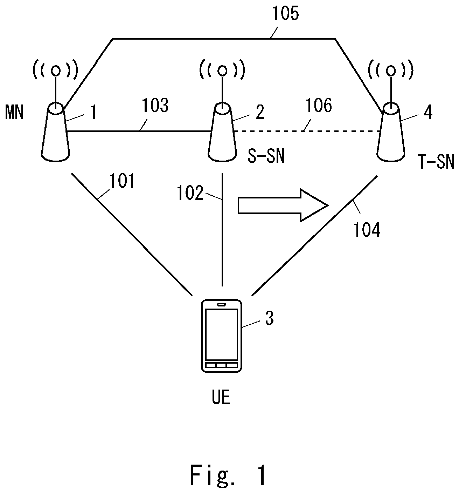

First, the configuration and operation of a plurality of network elements common to a plurality of example embodiments are described. Fig. 1 shows an example configuration of a radio communication system according to a plurality of example embodiments. In the example of Fig. 1, the radio communication system includes a RAN node 1, a RAN node 2, a RAN node 4, and a UE 3. Each element (or network function) shown in Fig. 1 can be implemented, for example, as a network element on dedicated hardware, as a software instance running on dedicated hardware, or as a virtualized function instantiated on an application platform.

The RAN node 1 may be a Central Unit (e.g., eNB-CU or gNB-CU) in a Cloud RAN (C-RAN) deployment, or a combination of a CU and one or more Distributed Units (e.g., eNB-DUs or gNB-DUs). The C-RAN is also referred to as a CU/DU split. The CU may include a Control Plane (CP) Unit (e.g., gNB-CU-CP) and one or more User Plane (UP) Units (e.g., gNB-CU-UPs). Accordingly, the RAN node 1 may be a CU-CP or a combination of a CU-CP and a CU-UP(s). Similarly, each of the RAN nodes 2 and 4 may be a CU or a combination of a CU and one or more DUs. Each of the RAN nodes 2 and 4 may be a CU-CP or a combination of a CU-CP and a CU-UP(s).

Each of the RAN nodes 1, 2, and 4 may be an Evolved Universal Mobile Telecommunications System (UMTS) Terrestrial Radio Access Network (EUTRAN) node or a Next Generation Radio Access Network (NG-RAN) node. The EUTRAN node may be an eNB or an en-gNB. The NG-RAN node may be a gNB or an ng-eNB. The en-gNB is a node that provides NR user plane and control plane protocol terminations towards a UE and acts as a Secondary Node (SN) in E-UTRA-NR Dual Connectivity (EN-DC). The ng-eNB is a node that provides E-UTRA user plane and control plane protocol terminations towards a UE and is connected to a 5GC via an NG interface. The Radio Access Technology (RAT) of the RAN node 1 may be different from that of the RAN nodes 2 and 4.

The RAN node 1 and the RAN node 2 communicate with each other through an inter-node interface (i.e., X2 interface or Xn interface) 103. The RAN node 1 and the RAN node 2 operate as a Master Node (MN) and a Secondary Node (SN), respectively, in dual connectivity. In addition, the RAN node 1 and the RAN node 4 communicate with each other through an inter-node interface (i.e., X2 interface or Xn interface) 105. The RAN node 1 and the RAN node 4 can operate as an MN and an SN, respectively, in DC.

The RAN nodes 1, 2, and 4 and the UE 3 support inter-SN CPC from an SCG provided by the RAN node 2 to an SCG provided by the RAN node 4. Accordingly, in the following, the RAN node 1 may be referred to as MN 1, the RAN node 2 may be referred to as source SN (S-SN) 2, and the RAN node 4 may be referred to as target SN (T-SN) 4 or candidate SN 4. Inter-SN CPC may also be referred to as conditional SN change. Inter-SN CPC (or conditional SN change) is an inter-SN PSCell change procedure (or SN change procedure) that is performed only when a CPC execution condition is met.

Although not shown in Fig. 1, a plurality of candidate cells (i.e., candidate PSCells) provided by a plurality of candidate SNs 4 may be prepared for an inter-SN CPC. In the inter-SN CPC procedure, the UE 3 receives, from the MN 1, configurations of one or more candidate PSCells prepared by one or more candidate SNs and one or more CPC execution conditions associated therewith. More specifically, the configuration of each candidate PSCell is an Information Element (IE) (e.g., condRRCReconfig) of an RRC message of the MN 1, and the configurations of one or more candidate PSCells and the associated CPC execution conditions are included in conditional mobility configuration information (e.g., conditionalReconfiguration IE) generated by the MN 1.

The configuration of each candidate PSCell is generated by the candidate SN (e.g., candidate SN 4) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a cell group (CG) configuration, an SCG configuration, or an SCG radio resource configuration, or any combination thereof. More specifically, the configuration of each candidate PSCell may be an SN RRC Reconfiguration message generated by the candidate SN (e.g., candidate SN 4) that provides (or has prepared) that candidate PSCell. Part or all of the configurations of one or more candidate PSCells are contained in a CPC configuration sent from the MN 1 to the UE 3. The CPC configuration of an inter-SN CPC is a list of one or more MN RRC Reconfiguration messages. Each MN RRC Reconfiguration message contains the configuration of a candidate PSCell (e.g., one or any combination of RB configuration, CG configuration, SCG configuration, SCG radio resource configuration, and SN RRC Reconfiguration message) received from the candidate SN.

On the other hand, CPC execution conditions are generated by the MN 1 in the case of MN-initiated inter-SN CPC and by the source SN 2 in the case of SN-initiated inter-SN CPC. A CPC execution condition may consist of one or more trigger conditions. A condition or criterion that triggers a CPC event may be similar to that for a measurement report event and may be, for example, CondEvent B1, CondEvent A3, CondEvent A4, or CondEvent A5. CondEvent B1 is "Conditional reconfiguration candidate becomes better than absolute threshold". CondEvent A3 is "Conditional reconfiguration candidate becomes amount of offset better than PCell/PSCell". CondEvent A4 is "Conditional reconfiguration candidate becomes better than absolute threshold". CondEvent A5 is "PCell/PSCell becomes worse than absolute threshold1 AND Conditional reconfiguration candidate becomes better than another absolute threshold2". The UE 3 evaluates the CPC execution conditions. If the execution condition(s) for one candidate PSCell is (or are) met, the UE 3 applies the PSCell configuration (e.g., one or any combination of RB configuration, CG configuration, SCG configuration, SCG radio resource configuration, and SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

The UE 3 communicates with the MN 1 and the S-SN 2 via the air interfaces 101 and 102 and performs dual connectivity of the MCG provided by the MN 1 and the SCG provided by the S-SN 2. In addition, by performing an inter-SN CPC, the UE 3 communicates with the MN 1 and the T-SN 4 via the air interfaces 101 and 104 and performs dual connectivity of the MCG provided by the MN 1 and the SCG provided by the T-SN 4.

This dual connectivity may be Multi-Radio Dual Connectivity (MR-DC). The MR-DC includes E-UTRA-NR Dual Connectivity (EN-DC), NG-RAN E-UTRA-NR Dual Connectivity (NGEN-DC), NR-E-UTRA Dual Connectivity (NE-DC), and NR-NR Dual Connectivity (NR-DC). Accordingly, the MN 1 may be one of a Master eNB (in EN-DC), a Master ng-eNB (in NGEN-DC), and a Master gNB (in NR-DC and NE-DC). Similarly, each of the S-SN 2 and the T-SN 4 may be one of an en-gNB (in EN-DC), a Secondary ng-eNB (in NE-DC), and a Secondary gNB (in NR-DC and NGEN-DC). In EN-DC, the UE 3 is connected to an eNB acting as the MN 1 and to an en-gNB acting as the S-SN 2 or the T-SN 4. In NGEN-DC, the UE 3 is connected to an ng-eNB acting as the MN 1 and to a gNB acting as the S-SN 2 or the T-SN 4. In NE-DC, the UE 3 is connected to a gNB acting as the MN 1 and to an ng-eNB acting as the S-SN 2 or the T-SN 4. In NR-DC, the UE 3 is connected to one gNB (or gNB-DU) acting as the MN 1 and to another gNB (or gNB-DU) acting as the S-SN 2 or the T-SN 4.

The MCG is a group of serving cells associated with (or provided by) the MN 1, including the SpCell (i.e., Primary Cell (PCell)) and optionally one or more Secondary Cells (SCells). Meanwhile, the SCG is a group of serving cells associated with (or provided by) the S-SN 2 or the T-SN 4 and includes the Primary SCG Cell (PSCell) and optionally one or more Secondary Cells (SCells). The PSCell is the Special Cell (SpCell) of the SCG and supports Physical Uplink Control Channel (PUCCH) transmission and contention-based random access. In LTE (e.g., LTE-DC and NE-DC), PSCell may be an abbreviation of Primary SCell.

As used in the present specification, the term "primary SCG cell" and its abbreviation "PSCell" stands for a cell that is included in a cell group provided by an SN in dual connectivity, has an uplink component carrier, and is configured with uplink control channel (e.g., PUCCH) resources. Specifically, the term "primary SCG cell" and its abbreviation "PSCell" may refer to a Primary SCG Cell of a cell group provided by an SN (e.g., en-gNB in EN-DC, gNB in NGEN-DC, or gNB in NR-DC) supporting 5G NR, or may refer to a Primary SCell of a cell group provided by an SN (e.g., eNB in LTE DC, or ng-eNB in NE-DC) supporting E-UTRA.

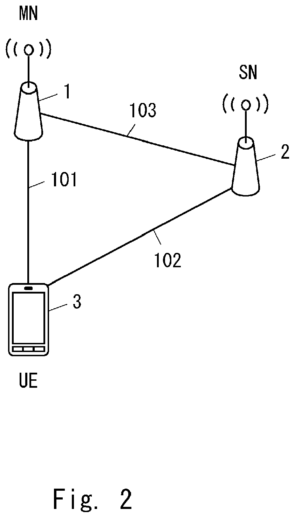

Fig. 2 shows another example configuration of a radio communication system according to a plurality of example embodiments. In the example in Fig. 2, the radio communication system includes a RAN node 1, a RAN node 2, and a UE 3. Each element (or network function) shown in Fig. 2 can be implemented, for example, as a network element on dedicated hardware, as a software instance running on dedicated hardware, or as a virtualized function instantiated on an application platform.

The RAN node 1, RAN node 2, and UE 3 in the example in Fig. 2 may have a similar configuration and functionality to those in the example in Fig. 1. Specifically, the RAN node 1 and the RAN node 2 communicate with each other through an inter-node interface (i.e., X2 interface or Xn interface) 103. The RAN node 1 and the RAN node 2 operate as an MN and a SN, respectively, in dual connectivity. The UE 3 communicates with the MN 1 and the SN 2 via air interfaces 101 and 102 and performs dual connectivity of an MCG and an SCG. This dual connectivity may be Multi-Radio Dual Connectivity (MR-DC).

The RAN nodes 1 and 2 and the UE 3 support Conditional PSCell Addition (CPA) to add an SCG provided by the RAN node 2 for the UE 3. Accordingly, in the following, the RAN node 1 may be referred to as MN 1 and the RAN node 2 may be referred to as candidate SN 2. CPA may be referred to as conditional SN addition. CPA (or conditional SN addition) is a PSCell addition procedure (or SN addition procedure) that is performed only when a CPA execution condition is met.

Although not shown in Fig. 2, a plurality of candidate PSCells provided by a plurality of candidate SNs 2 may be prepared for a CPA. In the CPA procedure, the UE 3 receives, from the MN 1, configurations of one or more candidate PSCells prepared by one or more candidate SNs and one or more CPA execution conditions associated therewith. More specifically, the configuration of each candidate PSCell is an Information Element (IE) (e.g., condRRCReconfig) of an RRC message of the MN 1, and the configurations of one or more candidate PSCells and the associated CPA execution conditions are included in conditional mobility configuration information (e.g., conditionalReconfiguration IE) generated by the MN 1.

The configuration of each candidate PSCell is generated by the candidate SN (e.g., candidate SN 2) that provides (or has prepared) that candidate PSCell. The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be one or any combination of an RB configuration, a CG configuration, an SCG configuration, and an SCG radio resource configuration. More specifically, the configuration of each candidate PSCell may be an SN RRC Reconfiguration message generated by the candidate SN (e.g., candidate SN 2) that provides (or has prepared) that candidate PSCell. Part or all of the configurations of one or more candidate PSCells are contained in a CPA configuration sent from the MN 1 to the UE 3. The CPA configuration is a list of one or more MN RRC Reconfiguration messages. Each MN RRC Reconfiguration message contains the configuration of a candidate PSCell (e.g., one or any combination of RB configuration, CG configuration, SCG configuration, SCG radio resource configuration, and SN RRC Reconfiguration message) received from the candidate SN.

On the other hand, CPA execution conditions are generated by the MN 1. A CPA execution condition may consist of one or more trigger conditions. A condition or criterion that triggers a CPA event may be similar to that for a measurement report event and may be, for example, CondEvent A3, CondEvent A4, or CondEvent A5. The UE 3 evaluates the CPA execution conditions. If the execution condition(s) for one candidate PSCell is (or are) met, the UE 3 applies the PSCell configuration (i.e., CG configuration, SCG configuration, SCG radio resource configuration, or SN RRC Reconfiguration message) corresponding to the selected candidate PSCell (i.e., the candidate PSCell whose execution condition(s) is (or are) satisfied). If a bearer requiring SCG radio resources is configured, the UE 3 performs synchronization with the selected PSCell. If the execution conditions for two or more candidate PSCells are satisfied, the UE 3 may select one of these candidate PSCells and perform the operation described above.

In addition, the RAN node 2 and the UE 3 support intra-SN CPC. Intra-SN CPC may be referred to as SN-initiated Conditional SN Modification without MN involvement. Intra-SN CPC is an intra-SN PSCell change procedure that is performed only when a CPC execution condition is met.

In the intra-SN CPC procedure, the UE 3 receives from the SN 2, configurations of one or more candidate PSCells prepared by the SN 2 and one or more CPC execution conditions associated therewith. The configurations and associated CPC execution conditions for respective candidate PSCells are contained in a CPC configuration of the intra-SN CPC. The SN 2 may send these to the UE 3 via the MN 1 or to the UE 3 via a direct signaling radio bearer (i.e., Signalling Radio Bearer 3 (SRB3)) between the SN 2 and the UE 3. More specifically, the configuration of each candidate PSCell is an Information Element (IE) (e.g., condRRCReconfig) of an RRC message of the SN 2, and the configurations of one or more candidate PSCells and the associated CPC execution conditions are included in conditional mobility configuration information (e.g., conditionalReconfiguration IE) generated by the SN 2.

The configuration of each candidate PSCell includes at least configuration information for the candidate PSCell. The configuration of each candidate PSCell may further include configuration information for one or more SCells that accompany (i.e., are configured together with or in association with) the candidate PSCell. The configuration of each candidate PSCell may be a radio bearer (RB) configuration, a cell group (CG) configuration, an SCG configuration, or an SCG radio resource configuration, or any combination thereof. In particular, the configuration of each candidate PSCell may be an SN RRC Reconfiguration message generated by the SN 2.

A CPC execution condition for an Intra-SN CPC may consist of one or more trigger conditions. A condition or criterion that triggers a CPC event may be similar to that for a measurement report event and may be, for example, CondEvent A3, CondEvent A4, or CondEvent A5. The UE 3 evaluates the CPC execution conditions. If the execution condition(s) for one candidate PSCell is (or are) met, the UE 3 detaches from the source PSCell, applies the configuration corresponding to the selected candidate PSCell (i.e., the candidate PSCell whose execution condition(s) is (or are) satisfied), and synchronizes with the selected candidate PSCell. If the execution conditions for two or more candidate PSCells are satisfied, the UE 3 may select one of these candidate PSCells and perform the operation described above.

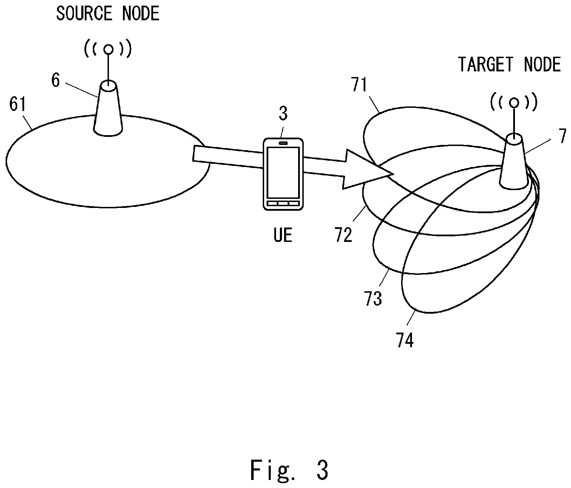

Fig. 3 shows yet another example configuration of a radio communication system according to a plurality of example embodiments. In the example in Fig. 3, the radio communication system includes a RAN node 6, a RAN node 7, and a UE 3. Each element (or network function) shown in Fig. 3 can be implemented, for example, as a network element on dedicated hardware, as a software instance running on dedicated hardware, or as a virtualized function instantiated on an application platform. Each of the RAN nodes 6 and 7 may be an EUTRAN node or an NG-RAN node. The EUTRAN node may be an eNB or an en-gNB. The NG-RAN node may be a gNB or an ng-eNB. The RAT of the RAN node 6 may be different from that of the RAN node 7.

The RAN node 6 provides at least one cell 61. The RAN node 7 provides one or more cells (e.g., four cells 71-74). In the example in Fig. 3, the cell 61 provided by the RAN node 6 is the current serving cell of the UE 3, and the UE 3 is handed over from the cell 61 to one of the cells provided by the RAN node 7. Accordingly, in the following, the RAN node 6 may be referred to as the source node or source RAN node, and the RAN node 7 may be referred to as the target node or target RAN node. The cell 61 is referred to as the source cell. The source node 6, the target node 7, and the UE 3 support conditional handover (CHO). CHO is a handover procedure that is performed only when a CHO execution condition is met.

Although not shown in Fig. 3, a plurality of candidate target cells provided by a plurality of candidate target nodes 7 may be prepared for a CHO. In the CHO procedure, the UE 3 receives from the source node 6 configurations of one or more candidate target cells prepared by one or more candidate target nodes and one or more CHO execution conditions (e.g., condExecutionCond) associated therewith. The configurations of one or more candidate target cells and the associated CHO execution conditions are contained in a CHO configuration. More specifically, the configuration of each candidate target cell is an Information Element (IE) (e.g., condRRCReconfig) of an RRC message of the source node 6, and the configurations of one or more candidate target cells and the associated CHO execution conditions are included in conditional mobility configuration information (e.g., conditionalReconfiguration IE) generated by the source node 6.

The configuration of each candidate target cell is generated by the candidate target node (e.g., target node 7) that provides (or has prepared) that candidate target cell. The configuration of each candidate target cell may be one or any combination of a radio bearer (RB) configuration, a radio resource configuration, and an RRC Reconfiguration message, generated by the candidate target node (e.g., target node 7) that provides (or has prepared) that candidate target cell.

On the other hand, CHO execution conditions are generated by the source node 6. A CHO execution condition may consist of one or more trigger conditions. A condition or criterion that triggers a CHO event may be similar to that for a measurement report event and may be, for example, CondEvent A3, CondEvent A4, or CondEvent A5. The UE 3 evaluates the CHO execution conditions. If the execution condition(s) for one candidate target cell is (or are) met, the UE 3 detaches from the source node 6, applies the configuration corresponding to the selected candidate target cell (i.e., the candidate target cell whose execution condition(s) is (or are) satisfied), and synchronizes with the selected candidate target cell. If the execution conditions for two or more candidate target cells are satisfied, the UE 3 may select one of these candidate target cells and perform the operation described above.

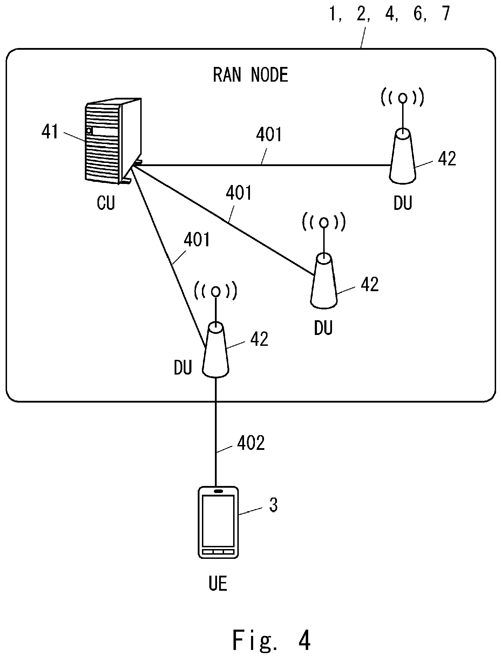

One or more of the RAN nodes 1, 2, 4, 6, and 7 may have the configuration shown in Fig. 4. Each element (or network function) shown in Fig. 4 can be implemented, for example, as a network element on dedicated hardware, as a software instance running on dedicated hardware, or as a virtualized function instantiated on an application platform. One or more of the RAN nodes 1, 2, 4, 6, and 7 may include, without limitation, a CU 41 and one or more DUs 42 as shown in Fig. 4. The CU 41 is connected to each DU 42 via an interface 401. The UE 3 is connected to at least one DU 42 via at least one air interface 402.

The CU 41 can be a logical node hosting the Radio Resource Control (RRC), Service Data Adaptation Protocol (SDAP), and Packet Data Convergence Protocol (PDCP) protocols of the gNB (or the RRC and PDCP protocols of the gNB). The DU 42 can be a logical node hosting the Radio Link Control (RLC), Medium Access Control (MAC), and Physical (PHY) layers of the gNB. If the CU 41 is a gNB-CU and the DUs 42 are gNB-DUs, the interfaces 401 can be F1 interfaces. The CU 41 can include a CU-CP and a CU-UP.

The term "conditional mobility" is used herein. Conditional mobility is a generic term that refers to one or more of CHO, CPA, intra-SN CPC (or conditional SN modification), and inter-SN CPC (or conditional SN change).

The following example embodiments provide conditional mobility enhancements. In particular, the following example embodiments provide conditional mobility enhancements to support a feature or mode of operation referred to as "Multi-Radio Dual Connectivity (MR-DC) with selective activation of cell groups". In this specification, this feature or mode of operation may be applied to conditional mobility that does not necessarily involve MR-DC, i.e., CHO. In addition, this feature or mode of operation may be applied to an enhanced CHO in which an SCG (or at least a PSCell) is added in conjunction with the execution of the CHO. As defined herein, this feature or mode of operation allows, for example, a subsequent second conditional mobility without at least reinitializing the conditional mobility preparations after a serving cell, serving cell group, PSCell, or SCG is changed or added in a first conditional mobility. In other words, as defined herein, the feature or mode of operation allows, for example, the UE 3 to reuse or maintain at least a portion of the candidate target cell configurations or candidate PSCell configurations (e.g., one or any combination of RB configuration, CG configuration, SCG configuration, radio resource configuration, and SCG radio resource configuration) received from the network in the first conditional mobility for a subsequent second conditional mobility. At least some of the execution conditions for the first conditional mobility may be reconfigured, updated, or modified for the second conditional mobility. Similarly, at least some of the information in the security key configuration (e.g., sk-Counter, Next Hop (NH), NH Chaining Count (NCC)) or security key information (e.g., SN Security Key) for the first conditional mobility may be reconfigured, updated, or modified for the second conditional mobility. The type of the second conditional mobility may be different from the type of the first conditional mobility. For example, the first conditional mobility may be a CPA, while the second conditional mobility may be an inter-SN CPC or an intra-SN CPC. Alternatively, the first conditional mobility may be an inter-SN CPC, while the second conditional mobility may be an intra-SN CPC.

This feature or mode of operation may be referred to as, for example, but not limited to, selective cell activation, selective cell group (CG) activation, selective SCG activation, adaptive cell switch, adaptive CG switch, adaptive SCG switch, subsequent cell change, subsequent CG change, subsequent CG selection, CPC kept, or CHO kept. For ease of explanation, in the following example embodiments, the feature or mode of operation is referred to as selective CG activation or selective cell activation. The term "selective CG activation" may be used for conditional mobility (e.g., CPA, inter-SN CPC, intra-SN CPC) with MR-DC. On the other hand, the term "selective cell activation" may be used for conditional mobility (e.g., CHO) that does not necessarily involve MR-DC.

In this specification, the combination of a candidate Special Cell (SpCell) and one or more SCells may be referred to as a candidate Cell Group (CG) set for conditional mobility or selective CG activation. Selective CG activation can be thought of as changing or switching the serving SCG among multiple candidate CG sets. A candidate CG set contains at least a candidate SpCell and optionally one or more SCells. A candidate cell (candidate SpCell) may be a current SCell (i.e., an SCell in the current SCG) or a non-serving cell that is not currently provided to the UE 3. The UE 3 may be configured with multiple candidate CG sets with different candidate SpCells. In the case of conditional mobility (e.g., CHO) with respect to the MCG, candidate SpCells are candidate PCells, and multiple candidate CG sets are multiple candidate MCG sets. On the other hand, in the case of conditional mobility with respect to the SCG (e.g., CPA, intra-SN CPC, inter-SN CPC), candidate SpCells are candidate PSCells, and multiple candidate CG sets are multiple candidate SCG sets.

The terms "MN RRC Message", "MN RRC Reconfiguration Message", "SN RRC Message", and "SN RRC Reconfiguration Message" are used herein. These terms are used for convenience only to distinguish RRC messages generated by the MN from RRC messages generated by the SN. Accordingly, MN RRC messages and MN RRC Reconfiguration messages may be referred to simply as RRC messages and RRC Reconfiguration messages. Similarly, SN RRC messages and SN RRC Reconfiguration messages may be referred to simply as RRC messages and RRC Reconfiguration messages.

### First Example Embodiment

This example embodiment provides improved CPA and inter-SN CPC for selective CG activation. Specifically, this example embodiment relates to clarifying various procedures for selective CG/cell activation. An example configuration of a radio communication system according to this example embodiment may be the same as the example shown in Fig. 1 or Fig. 2.

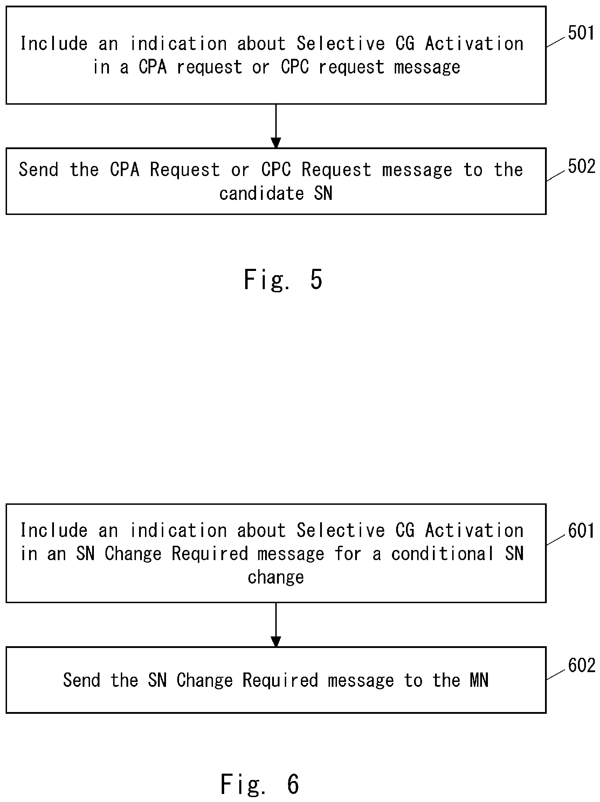

In the first implementation, before sending a CPA request to the candidate SN 2 or a CPC request to the candidate (target) SN 4, the MN 1 decides whether or not to perform, use, prepare, or recommend selective CG activation. The CPC request may be sent by the MN 1 in response to the determination by the MN 1 to initiate inter-SN CPC (i.e., MN-initiated inter-SN CPC). Alternatively, the CPC request may be sent by the MN 1 in response to the determination by the source SN 2 to initiate inter-SN CPC (i.e., SN-initiated inter-SN CPC). In other words, in SN-initiated inter-SN CPC, the CPC request may be sent by the MN 1 in response to the source SN 2 deciding to initiate the inter-SN CPC and requesting the MN 1 to perform it. If the decision is made to perform, use, prepare for, or recommend selective CG activation, the MN 4 operates as shown in Fig. 5.

In step 501, the MN 1 includes an indication about selective CG activation in a CPA request message or a CPC request message. In step 502, the MN 1 sends the CPA request message or CPC request message to the candidate SN 2 or 4. The CPA request message indicates that one or more candidate PSCells are to be prepared by the candidate SN 2 for a CPA. The CPC request message indicates that one or more candidate PSCells are to be prepared by the candidate SN 4 for an inter-SN CPC.

The CPA request message in steps 501 and 502 may be a SN Addition Request message for a conditional SN addition. In this case, the CPA request may be indicated by a Conditional PSCell Addition Information Request IE. The CPC request message may be a SN Addition Request message for a conditional SN change. In this case, the CPC request may be indicated by a Conditional PSCell Addition Information Request IE or a Conditional PSCell Change Information Request IE. The indication about selective CG activation indicates to the candidate SN 2 or 4 that selective CG activation is requested or recommended for a subsequent CPC after the CPA or inter-SN CPC in question. The subsequent CPC may be an inter-SN CPC or an intra-SN CPC. The indication about selective CG activation may be referred to as, but not limited to, "Selective CG activation request", "CPC kept request", or "Store CPC request".

In the second implementation, when initiating an SN-initiated inter-SN CPC, the source SN 2 decides whether or not to perform, use, prepare for, or recommend selective CG activation. In response to the decision to perform, use, prepare, or recommend selective CG activation, the source SN 2 operates as shown in Fig. 6. In step 601, the source SN 2 includes an indication about selective CG activation in an SN Change Required message for a conditional SN change. In step 602, the source SN 2 sends the SN Change Required message to the MN 1.

The SN Change Required messages in steps 601 and 602 indicate one or more candidate PSCells recommended by the source SN 2 for an inter-SN CPC. That it is a message for an inter-SN CPC may be indicated by the fact that the message contains a Conditional PSCell Change Information Required IE. The indication about selective CG activation indicates to the MN 1 that selective CG activation is requested or recommended for a subsequent CPC after the inter-SN CPC in question. The subsequent CPC may be an inter-SN CPC or an intra-SN CPC. The indication about selective CG activation may be referred to as, but not limited to, "Selective CG activation required", "CPC kept required", or "Store CPC required".

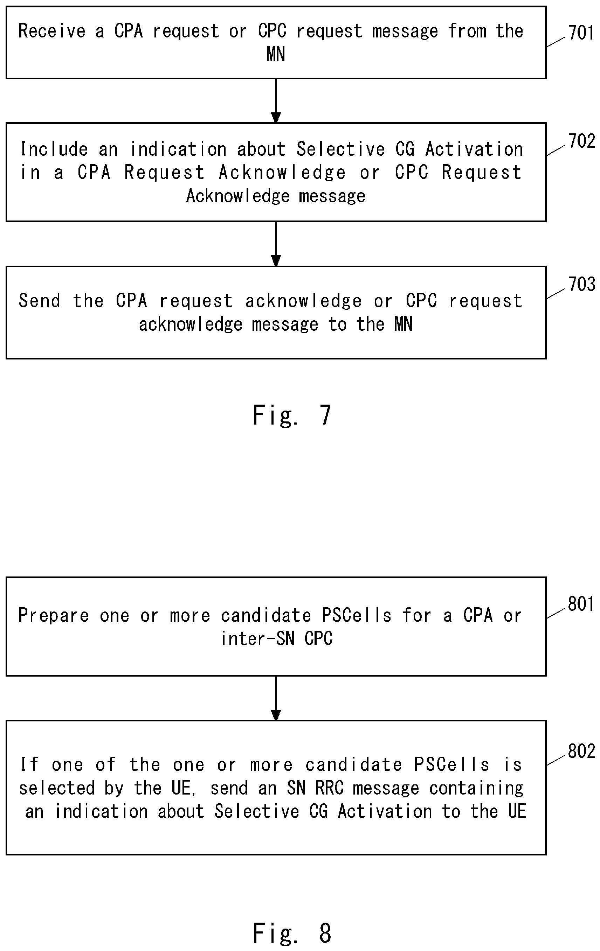

In the third implementation, in response to receiving a CPA or CPC request from the MN 1, the candidate SN 2 or 4 determines whether or not to perform, use, prepare, or recommend selective CG activation. The candidate SN 2 or 4 operates as shown in Fig. 7. In step 701, the candidate SN 2 or 4 receives a CPA request message or a CPC request message from the MN 1. The CPA request message indicates that one or more candidate PSCells are to be prepared by the candidate SN 2 for a CPA. The CPC request message indicates that one or more candidate PSCells are to be prepared by the candidate SN 4 for an inter-SN CPC. The CPA request message may be a SN Addition Request message for a conditional SN addition. The CPC request message may be a SN Addition Request message for a conditional SN change.

In step 702, the candidate SN 2 or 4 accepts to prepare at least one of the one or more candidate PSCells requested by the MN 1. In addition, the candidate SN 2 or 4 decides whether or not to perform, use, prepare, or recommend selective CG activation. If the decision is made to perform, use, prepare for, or recommend selective CG activation, the candidate SN 2 or 4 includes an indication about selective CG activation in a CPA request acknowledge message or a CPC request acknowledge message. In step 703, the candidate SN 2 or 4 sends the CPA request acknowledge or the CPC request acknowledge message to the MN 1.

The CPA request acknowledge message or the CPC request acknowledge message in steps 702 and 703 indicates at least one candidate PSCell prepared by the candidate SN 2 or 4. The CPA request acknowledge message may be an SN Addition Request Acknowledge message for a conditional SN addition. The CPC request acknowledge message may be an SN Addition Request Acknowledge message for a conditional SN change. The indication about selective CG activation indicates to the MN 1 that selective CG activation is requested or recommended for a subsequent CPC after the CPA or inter-SN CPC in question. The subsequent CPC may be an inter-SN CPC or an intra-SN CPC. The indication about selective CG activation may be referred to as, but not limited to, "Selective CG activation request", "Selective CG activation indication", "CPC kept request", "CPC kept indication", "Store CPC request", or "Store CPC indication".

In the fourth implementation, the selected candidate SN 2 or 4, which provides a candidate PSCell selected by the UE 3 in response to a CPA or CPC execution condition being met, determines whether or not to perform, use, prepare, or recommend selective CG activation. The selected candidate SN 2 or 4 operates as shown in Fig. 8. In step 801, the candidate SN 2 or 4 prepares one or more candidate PSCells for a CPA or inter-SN CPC for the UE 3. In other words, the candidate SN 2 or 4 prepares one or more candidate PSCells for a conditional SN addition or change for the UE 3. In step 801, the candidate SN 2 or 4 may exchange signaling with the MN 1 in the same manner as an existing CPA or inter-SN CPC. In particular, the candidate SN 2 or 4 may receive a CPA request message or a CPC request message from the MN 1 and send a CPA request acknowledge message or a CPC request acknowledge message to the MN 1. The CPA request or CPC request message may be a SN Addition Request message for a conditional SN addition or change. The CPA request acknowledge or CPC request acknowledge message may be a SN Addition Request Acknowledge message for a conditional SN addition or change.

In step 802, if one of the one or more candidate PSCells has been selected by the UE 3, the candidate SN 2 or 4 transmits to the UE 3 an SN RRC message containing an indication about selective CG activation. The SN RRC message may be an SN RRC Reconfiguration message. The indication indicates to the UE 3 that selective CG activation is requested or recommended for a subsequent CPC after the CPA or inter-SN CPC in question. The subsequent CPC may be an intra-SN CPC. In other words, the subsequent CPC may be an intra-SN CPC to one or more other candidate PSCells that were prepared for the CPA or inter-SN CPC by the selected candidate SN 2 or 4, but were not selected by the UE 3. The indication about selective CG activation may be referred to as, but not limited to, "Selective CG activation indication", "CPC kept indication", "Store CPC indication", or "Keep unused CPC configuration indication".

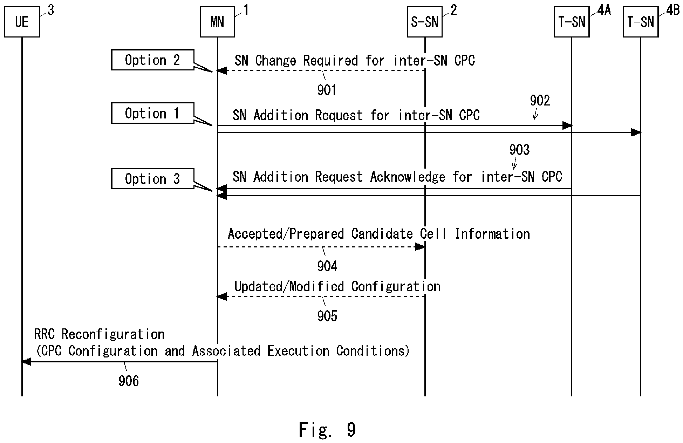

Fig. 9 shows an example of signaling during the CPC preparation phase of an inter-SN CPC (or conditional SN change) procedure. In step 901, when the source SN 2 initiates an inter-SN CPC, the source SN 2 sends an SN Change Required message to the MN 1. The SN Change Required message contains a list of proposed PSCell candidates recommended by the source SN 2, and associated CPC execution conditions. Step 901 is omitted in the case of an MN-initiated inter-SN CPC.

In step 902, the MN 1 sends an SN Addition Request message to each of one or more candidate target SNs 4 (e.g., SN 4A and 4B). The SN Addition Request message includes a list of PSCell candidates. The list indicates one or more candidate PSCells proposed by the MN 1 in the case of an MN-initiated inter-SN CPC, or one or more candidate PSCells proposed by the source SN 2 in the case of an SN-initiated inter-SN CPC.

In step 903, each candidate target SN 4 sends an SN Addition Request Acknowledge message to the MN 1. The SN Addition Request Acknowledge message includes a configuration of each of one or more candidate PSCells prepared by the candidate target SN 4. As already described, the configuration of each candidate PSCell may be one or any combination of an RB configuration, a CG configuration, an SCG configuration, an SCG radio resource configuration, and an SN RRC Reconfiguration message.

For an inter-SN CPC, step 904 or steps 904 and 905 may be performed. In step 904, the MN 1 may indicate to the source SN 2 the one or more candidate PSCells accepted by the candidate target SN 4, if necessary, for example, if the candidate target SN 4 has not accepted all the candidate PSCells proposed by the source SN 2. In step 905, the source SN 2 may provide the MN 1 with an updated or modified configuration (e.g., measurement configuration or CPC execution conditions) for the CPC.

In step 906, the MN 1 transmits to the UE 3 an MN RRC Reconfiguration message (RRC Reconfiguration*) containing the CPC configuration (e.g., condRRCReconfig) and the associated CPC execution conditions. The CPC configuration of an Inter-SN CPC is a list of one or more MN RRC Reconfiguration messages (RRC Reconfiguration**). Each MN RRC Reconfiguration message (RRC Reconfiguration**) contains the configuration of a candidate PSCell (i.e., an SN RRC Reconfiguration message (RRC Reconfiguration***)) received from the candidate SN. The CPC configuration (i.e., the list of MN RRC Reconfiguration messages (RRC Reconfiguration**)) and the associated CPC execution conditions are contained in Conditional Mobility Configuration Information (e.g., a conditionalReconfiguration IE) within the MN RRC Reconfiguration message (RRC Reconfiguration*).

In the first implementation described above, the MN 1 includes an indication of selective CG activation in the SN Addition Request message (step 902), as shown in Fig. 9 as Option 1. The candidate target SN 4 may include an indication of whether or not selective CG activation is acceptable in the SN Addition Request Acknowledge message (step 903).

In the second implementation described above, the source SN 2 includes an indication of selective CG activation in the SN Change Required message (step 901), as shown in Fig. 9 as Option 2. The MN 1 may include an indication of selective CG activation in the SN Addition Request message (step 902). The candidate target SN 4 may include an indication of whether or not selective CG activation is acceptable in the SN Addition Request Acknowledge message (step 903). The MN 1 may indicate to the source SN 2 whether or not the selective CG activation requested, recommended, or proposed by the source SN 2 has been accepted, for example in step 904.

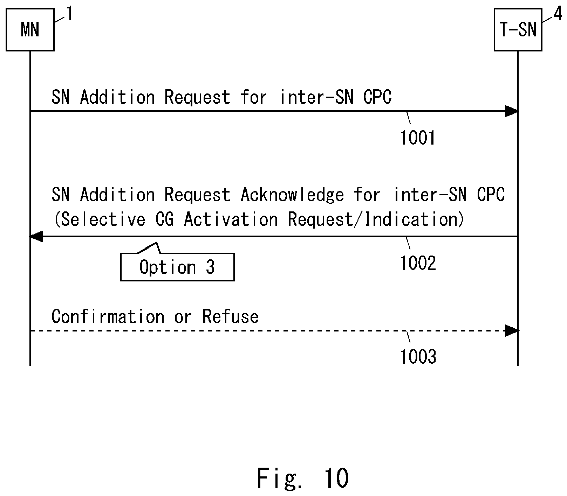

In the third implementation described above, the candidate target SN 4 includes an indication of selective CG activation in the SN Addition Request Acknowledge message (step 903), as shown in Fig. 9 as Option 3. In this case, MN 1 may indicate to the candidate target SN 4 whether selective CG activation is acceptable or not. For example, as shown in step 1003 of Fig. 10, the MN 1 may send a control message (e.g., Xn or X2 message) to the candidate target SN 4 indicating acceptance or rejection of the selective CG activation. The control message may be sent only if the MN 1 accepts the selective CG activation requested, recommended, or proposed by the candidate target SN 4, or may be sent only if the MN 1 rejects it. Steps 1001 and 1002 in Fig. 10 are the same as steps 902 and 903 in Fig. 9.

In each of the first to third implementations, the MN RRC Reconfiguration message in step 906 may include an indication about selective CG activation. In other words, the MN 1 may inform the UE 3 via the MN RRC Reconfiguration message in step 906 that selective CG activation is requested, recommended, or available. In the first implementation described above, this indication may be generated by the MN 1 and may be one of the Information Elements (IEs) in the MN RRC Reconfiguration message. In the second implementation described above, this indication may be generated by the source SN 2, sent from the source SN 2 to the MN 1 via an SN RRC Information Element (IE) or SN RRC Reconfiguration, and embedded in the MN RRC Reconfiguration message. In the third and fourth implementations described above, this indication may be generated by the candidate SN 4, sent from the source SN 2 to the MN 1 via an SN RRC IE or SN RRC Reconfiguration, and embedded in the MN RRC Reconfiguration message.

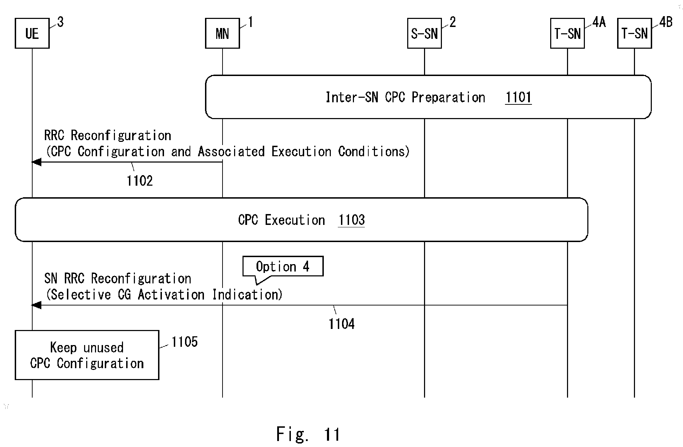

Fig. 11 shows an example of signaling of an inter-SN CPC (or conditional SN change) procedure for the fourth implementation described above. In step 1101, the MN 1, source SN 2, and one or more candidate target SNs 4 (e.g., candidate target SNs 4A and 4B) prepare an inter-SN CPC. In step 1102, the MN 1 transmits to the UE 3 an MN RRC Reconfiguration message (RRC Reconfiguration*) containing the CPC configuration and the associated CPC execution conditions. The MN RRC Reconfiguration message in step 1102 indicates the inter-SN CPC. In addition, the MN RRC Reconfiguration message may indicate to the UE 3 that selective CG activation is planned, expected, or possible for a subsequent intra-SN or inter-SN CPC after the inter-SN CPC in question.

In step 1103, if the execution condition for one of the prepared candidate PSCells is satisfied, the UE 3 executes a CPC (i.e., SN change or PSCell change) by applying the configuration of the selected candidate PSCell (i.e., the candidate PSCell whose execution condition is satisfied). In the example in Fig. 11, the UE 3 selects one of the one or more candidate PSCells prepared by the candidate target SN 4A. Note that after the CPC execution condition is satisfied, the UE 3 maintains or retains the CPC execution conditions associated with the configurations of the one or more other candidate PSCells without releasing them. The UE 3 may selectively maintain or retain only the configurations of one or more other candidate PSCells prepared by the selected candidate SN 4A. The UE 3 may operate in this manner if the MN RRC Reconfiguration message in step 1102 indicates that selective CG activation is planned, predicted, or possible.

In step 1104, the selected candidate SN 4A transmits an SN RRC message containing an indication of selective CG activation to the UE 3. The SN RRC message may be an SN RRC Reconfiguration message. The indication indicates to the UE 3 that selective CG activation is requested or recommended for a subsequent CPC after the inter-SN CPC in question. The subsequent CPC may be an intra-SN CPC. Upon receipt of the indication in step 1104, the UE 3 maintains or retains the unused CPC configuration (i.e., the candidate PSCell configurations) for a subsequent CPC (step 1105). The UE 3 may selectively maintain or retain only the configurations of one or more other candidate PSCells prepared by the selected candidate SN 4A. The UE 3 may also maintain or retain the associated CPC execution conditions in addition to the unused CPC configuration. If the UE 3 did not receive the indication in step 1104, it may release the provisionally maintained or retained CPC configuration (and CPC execution conditions).

The candidate SN 4A (or 4B) may inform the UE 3 in advance that if the UE 3 selects a candidate PSCell provided by the candidate SN 4A (or 4B), selective CG activation may be performed for other candidate PSCells provided by the candidate SN 4A (or 4B) (or the configuration information to do so). For example, the candidate SN 4A (or 4B) may provide this notification when it sends the configuration information for inter-SN CPC to the UE 3 via the MN 1. Upon receipt of this notification, the UE 3, even if it has performed inter-SN CPC, may (temporarily) retain the inter-SN CPC configuration information of the non-selected candidate PSCells, taking into account the possibility of selective CG activation. Additionally or alternatively, if the UE 3 supports selective CG activation, it may autonomously (temporarily) retain the inter-SN CPC configuration information of the non-selected candidate PSCells until it receives the SN RRC message (step 1104) described above from the candidate SN 4A.

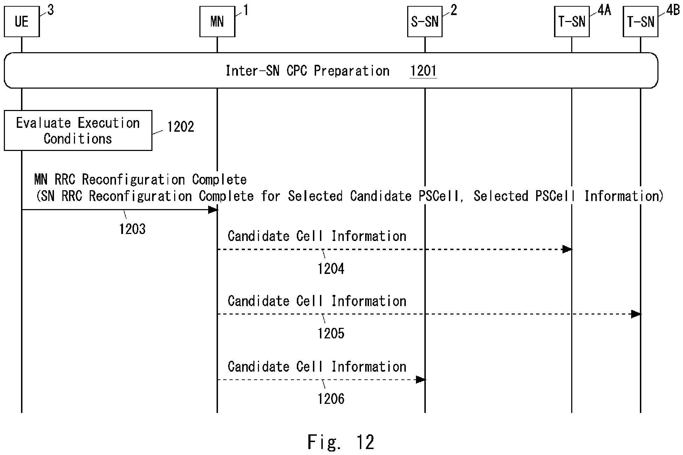

Fig. 12 shows an example of signaling for an inter-SN CPC (or conditional SN change) procedure in this example embodiment. The MN 1 may inform the selected candidate SN 4 (e.g., 4A), which provides the candidate PSCell selected by the UE 3, of the candidate PSCell(s) prepared by the other candidate SN(s) 4 (e.g., 4B) to which selective CG activation is applied. Based on this information, the selected candidate SN 4 (e.g., 4A) may configure or update measurement configurations or CPC execution conditions or both. The selected candidate SN 4 (e.g., 4A) may transmit the updated measurement configurations and/or execution conditions to the UE 3 via the MN 1.

Additionally or alternatively, the MN 1 may inform each non-selected candidate target SN 4 (e.g., 4B) of the candidate PSCell(s) prepared by the other candidate SN(s) 4 (e.g., 4A) to which selective CG activation is applied (or imposed). Based on this information, the non-selected candidate SN 4 (e.g., 4B) may configure or update measurement configurations or CPC execution conditions or both. The unselected candidate SN 4 (e.g., 4B) may transmit the updated measurement configurations and/or execution conditions to the UE 3 via the MN 1.

Additionally or alternatively, the MN 1 may inform the source SN 2 of the candidate PSCell(s) prepared by the other candidate SN(s) 4 (e.g., 4A and 4B) to which selective CG activation is applied (or imposed). This may be done when selective CG activation is applied to or imposed on the last serving PSCell served by the source SN 2. Based on this information, the source SN 2 may update measurement configurations and generate CPC execution conditions. The source SN 2 may transmit the updated measurement configurations and/or the generated execution conditions to the UE 3 via the MN 1.

In step 1201 of Fig. 12, an inter-SN CPC is prepared. In step 1202, the UE 3 evaluates the CPC execution conditions. If the execution condition for a candidate PSCell is satisfied, the UE 3 sends the corresponding MN RRC Reconfiguration Complete message to the MN 1 (step 1203). This MN RRC Reconfiguration Complete message contains the SN RRC Reconfiguration Complete message for the candidate PSCell whose execution condition has been met (i.e., the selected candidate PSCell) and also contains information about the selected candidate PSCell. The information about the selected candidate PSCell may be provided implicitly (or indirectly) by an identifier (e.g., CondReconfigId) associated with the candidate PSCell configuration and CPC execution condition(s) (e.g., condExecutionCond or condExecutionCondSN).

In step 1204, the MN 1 may inform the selected candidate SN 4 (e.g., 4A) of the candidate PSCell(s) prepared by the other candidate SN(s) 4 (e.g., 4B) to which the selective CG activation is applied. For the transmission of step 1204, an existing SN Reconfiguration Complete message containing the SN RRC Reconfiguration Complete message for the selected candidate PSCell(s) may be reused or extended. Alternatively, a new Xn/X2 message may be defined for the transmission of step 1204.

In step 1205, the MN 1 may inform the non-selected candidate SN 4 (e.g., 4B) of the candidate PSCell(s) prepared by the other candidate SN(s) 4 (e.g., 4A) to which the selective CG activation is applied. For the transmission of step 1205, an existing Xn/X2 message for CPC Cancel (e.g., CPC Cancel, SN Release Request, or UE Context Release) may be reused or extended. Alternatively, a new Xn/X2 message may be defined for the transmission of step 1205.

In step 1206, the MN 1 may inform the source SN 2 of the candidate PSCell(s) prepared by the other candidate SN(s) 4 (e.g., 4A and 4B) to which the selective CG activation is applied. For the transmission of step 1206, an existing Xn/X2 message for UE context release (e.g., UE Context Release) may be reused or extended. Alternatively, a new Xn/X2 message may be defined for the transmission of step 1206. The order of steps 1204 to 1206 is not restricted.

The operations of the MN 1, the source SN 2, the candidate SN 4, and the UE 3 described above may be modified as follows. In some implementations, selective CG activation may be applied to or imposed on the last serving PSCell served by the source SN 2. In this case, upon completion of the inter-SN CPC, the UE 3 retains the configuration of the last serving PSCell for reuse in a subsequent CPC. In the case of an MN-initiated inter-SN CPC, the MN 1 may inform the source SN 2 that selective CG activation is to be applied or requested for the source PSCell. In the case of SN-initiated inter-SN CPC, the source SN 2 may inform the MN 1 that selective CG activation is to be or can be applied to the source PSCell. For example, the source SN 2 may include an indication of the application of selective CG activation to the source PSCell in the SN Change Required message of step 901 in Fig. 9. This indication may be referred to as, for example, but not limited to, "S-SN kept" or "Source PSCell kept". The MN 1 may inform the candidate SN 4 that selective CG activation is to be applied to the source PSCell or that it is requested. For example, the MN 1 may include an indication of the application of selective CG activation to the source PSCell in the SN Addition Request message of step 902 in Fig. 9. This indication may be referred to as, for example, but not limited to, "S-SN kept".

The MN 1 may reconfigure, update or modify the security key information (e.g., SN Security Key) to make it suitable for selective CG activation and send it to the candidate SN 4 (e.g., 4A) selected by the UE 3 in the inter-SN CPC. For example, the MN 1 may send the security key information to the selected candidate SN 4 (e.g., 4A) in the same or a different message than the message in step 1204. In addition, the MN 1 may reconfigure, update or modify at least part of the information in the security key configuration (e.g., sk-Counter, Next Hop (NH), NH Chaining Count (NCC)) to make it suitable for selective CG activation, and transmit it to the UE 3.

The MN 1 may reconfigure, update or modify the security key information (e.g., SN Security Key) to make it suitable for selective CG activation and send it to the candidate SN 4 (e.g., 4B) not selected by the UE 3 in the inter-SN CPC. For example, the MN 1 may send the security key information to the non-selected candidate SN 4 (e.g., 4B) in the same or a different message than the message in step 1205. In addition, the MN 1 may reconfigure, update or modify at least part of the information in the security key configuration (e.g., sk-Counter, Next Hop (NH), NH Chaining Count (NCC)) to make it suitable for selective CG activation, and transmit it to the UE 3.

The operations of the MN 1, the source SN 2 (or candidate SN 2 in the CPA), the candidate SN 4, and the UE 3 and the procedures described in this example embodiment can help clarify procedures for enabling selective CG activation for CPA and inter-SN CPC. Specifically, they can clarify which node (e.g., MN, source SN, or candidate SN) decides whether or not to use selective CG activation for CPA and inter-SN CPC, and when this decision is made.

### Second Example Embodiment

This example embodiment provides improved CPA and inter-SN CPC for selective CG activation. This example embodiment relates to the reuse of multiple candidate PSCell configurations for CPA or inter-SN CPC (or conditional SN change) in a subsequent CPC. An example configuration of a radio communication system according to this example embodiment may be the same as the example shown in Fig. 1 or Fig. 2.

In the first implementation, the UE 3 maintains or retains all configurations of the multiple candidate PSCells for the CPA or inter-SN CPC, except the selected one candidate PSCell, for a subsequent CPC. As already described, the configuration of each candidate PSCell may be one or any combination of an RB configuration, a CG configuration, an SCG configuration, an SCG radio resource configuration, and an SN RRC Reconfiguration message. The UE 3 may further maintain or retain the associated CPA or CPC execution conditions as CPC execution conditions for a subsequent CPC. The UE 3 may update or modify one or more CPC execution conditions in response to instructions from the MN 1 or candidate SN 2 or 4, or autonomously. For example, the UE 3 may switch the reference cell in one or more CPC execution conditions (e.g., CondEvent A3 or CondEvent A5) from the source cell of the first CPC (i.e., the last serving PSCell provided by the source SN 2) to the selected PSCell provided by the candidate SN 2 or 4.

In the second implementation, for a subsequent CPC after the first CPA or CPC, the UE 3 selectively maintains or retains only the configurations of one or more other candidate PSCells provided by the selected candidate SN 2 or 4 providing the selected candidate PSCell in the first CPA or CPC. Accordingly, in the second implementation, the subsequent CPC is an intra-SN CPC within the selected candidate SN 2 or 4. The configuration of each candidate PSCell may be one or any combination of an RB configuration, a CG configuration, an SCG configuration, an SCG radio resource configuration, and an SN RRC Reconfiguration message. As in the first implementation, the UE 3 may maintain or retain the associated CPC execution conditions for a subsequent CPC. The UE 3 may update or modify one or more CPC execution conditions in response to instructions from the MN 1 or candidate SN 2 or 4, or autonomously.

In the third implementation, the UE 3 selectively maintains or retains, for a subsequent CPC, the configurations of one or more candidate PSCells other than the candidate PSCells selected in the first CPA or CPC, as specified by the MN 1 or one or more candidate SN 2 or 4. The configuration of each candidate PSCell may be one or any combination of an RB configuration, a CG configuration, an SCG configuration, an SCG radio resource configuration, and an SN RRC Reconfiguration message. As in the first implementation, the UE 3 may maintain or retain the associated CPC execution conditions for a subsequent CPC. The UE 3 may update or modify one or more CPC execution conditions in response to instructions from the MN 1 or candidate SN 2 or 4, or autonomously.

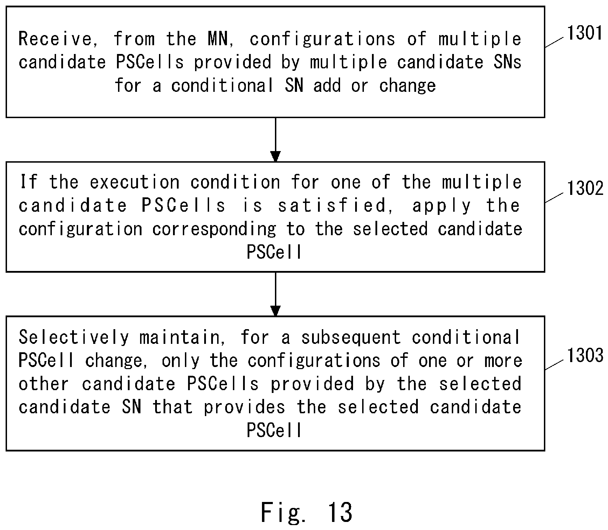

Fig. 13 shows an example of the operation of the UE 3 in the second implementation. In step 1301, the UE 3 receives from the MN 1 configurations of multiple candidate PSCells provided by the multiple candidate SNs 2 and 4 for a conditional SN addition (i.e., CPA) or SN change (i.e., inter-SN CPC). The UE 3 also receives from the MN 1 multiple CPC execution conditions associated with the multiple candidate PSCells. In step 1302, the UE 3 evaluates the multiple CPC execution conditions. If the execution condition for one of the multiple candidate PSCells is satisfied, the UE 3 applies the configuration corresponding to the selected candidate PSCell (i.e., the candidate PSCell whose execution condition is satisfied). In step 1303, for a subsequent conditional PSCell change (i.e., intra-SN CPC), the UE 3 selectively maintains only the configurations of one or more other candidate PSCells provided by the selected candidate SN 2 or 4 that provides the selected candidate PSCell.

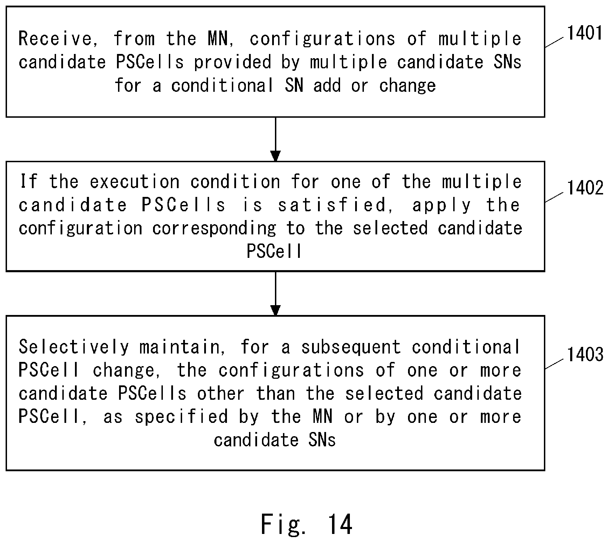

Fig. 14 shows an example of the operation of the UE 3 in the third implementation. Steps 1401 and 1402 are the same as steps 1301 and 1302 in Fig. 13. In step 1403, the UE 3 selectively maintains, for a subsequent CPC, the configurations of one or more candidate PSCells among the plurality of candidate PSCells other than the selected candidate PSCell, as specified by the MN 1 or one or more candidate SN 2 or 4.

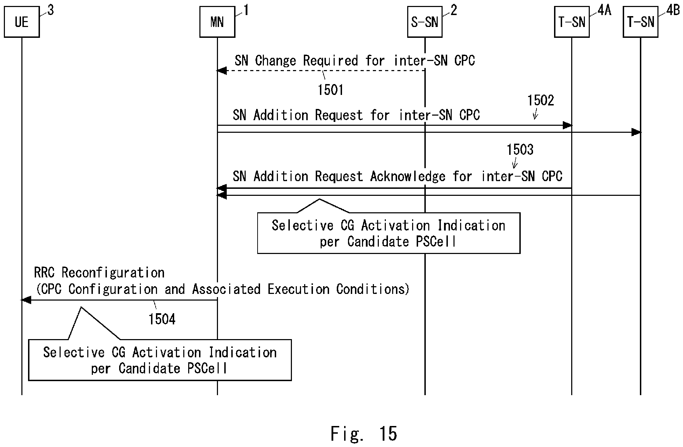

Fig. 15 shows an example of signaling during the CPC preparation phase in an inter-SN CPC (or conditional SN change) procedure for the third implementation described above. The basic role and structure of the messages in steps 1501 to 1504 are similar to those in steps 901 to 903 and 906 in Fig. 9. In step 1503, each candidate SN 4 includes an indication of selective CG activation per candidate PSCell in the SN Addition Request Acknowledge message. In other words, each candidate SN 4 indicates to the MN 1 on a per candidate PSCell basis whether selective CG activation is requested, recommended, or suggested. In step 1504, the MN 1 may include an indication of selective CG activation per candidate PSCell in the MN RRC Reconfiguration message. In other words, the MN 1 may indicate to the UE 3 on a per candidate PSCell basis whether selective CG activation is recommended, suggested, or available. Although not shown in Fig. 15, the MN 1 may indicate at least one candidate PSCell of the candidate SN 4 (e.g., 4A) to which selective CG activation is applied, to another candidate SN 4 (e.g., 4B).

The operations of the MN 1, the candidate SN 2 or 4, and the UE 3 and the procedures described in this example embodiment can help clarify procedures for enabling selective CG activation. Specifically, they can clarify which of the multiple candidate PSCell configurations for CPA or inter-SN CPC (or conditional SN change) is to be reused by the UE 3 for a subsequent CPC.

### Third Example Embodiment

This example embodiment provides an improved CHO for selective CG activation. Specifically, this example embodiment relates to clarifying various procedures for selective CG/cell activation. An example configuration of a radio communication system according to this example embodiment may be the same as the example shown in Fig. 3.

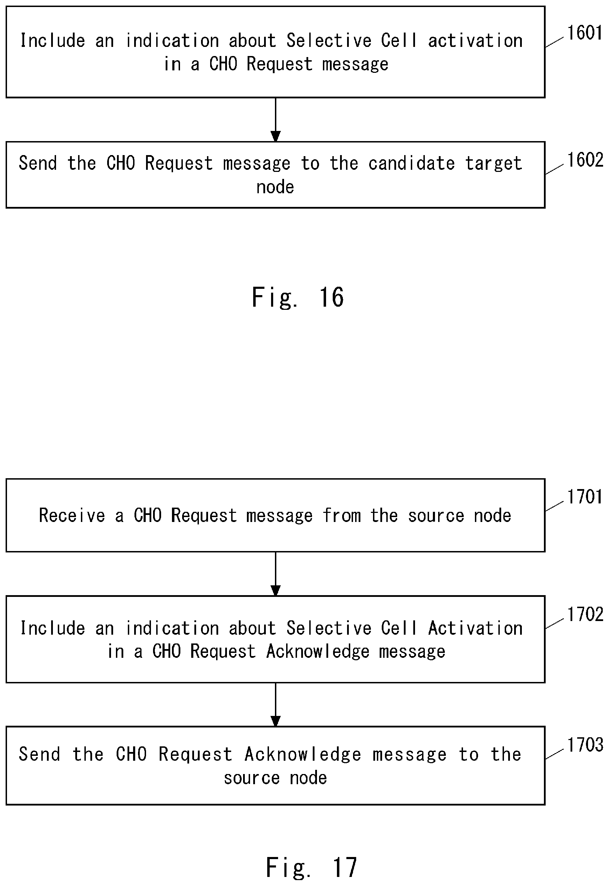

In the first implementation, before sending a CHO request to the candidate target node 7, the source node 6 decides whether or not to perform, use, prepare, or recommend selective cell activation. If the decision is made to perform, use, prepare, or recommend selective cell activation, the source node 6 operates as shown in Fig. 16.

In step 1601, the source node 6 includes an indication about selective cell activation in a CHO request message. In step 1602, the source node 6 sends the CHO request message to the candidate target node 7. The CHO request message indicates that one or more candidate target cells are to be prepared by the candidate target node 7 for a

### CHO.

The indication about selective cell activation indicates to the candidate target node 7 that selective cell activation is requested or recommended for a subsequent CHO after the CHO in question. The indication about selective cell activation may be referred to as, but not limited to, "Selective cell activation request", "CHO kept request", or "Store CHO request".

In the second implementation, in response to receiving a CHO request from the source node 6, the candidate target node 7 decides whether or not to perform, use, prepare, or recommend selective cell activation. The candidate target node 7 operates as shown in Fig. 17. In step 1701, the candidate target node 7 receives a CHO request message from the source node 6. The CHO request indicates that one or more candidate cells (i.e., candidate target cells) are to be prepared by the candidate target node 7 for a CHO.

In step 1702, the candidate target node 7 accepts to prepare at least one of the one or more candidate target cells requested by the source node 6. In addition, the candidate target node 7 decides whether or not to perform, use, prepare, or recommend selective cell activation. If the decision is made to perform, use, prepare for, or recommend selective cell activation, the candidate target node 7 includes an indication about selective cell activation in a CHO request acknowledge message. In step 1703, the candidate target node 7 sends the CHO request acknowledge message to the source node 6.

The CHO request acknowledge message in steps 1702 and 1703 indicates at least one candidate target cell prepared by the candidate target node 7. The indication about selective cell activation indicates to the source node 6 that selective cell activation is requested or recommended for a subsequent CHO after the CHO in question. The indication about selective cell activation may be referred to as, but not limited to, "Selective cell activation request", "Selective cell activation indication", "CHO kept request", "CHO kept indication", "Store CHO request", or "Store CHO indication".

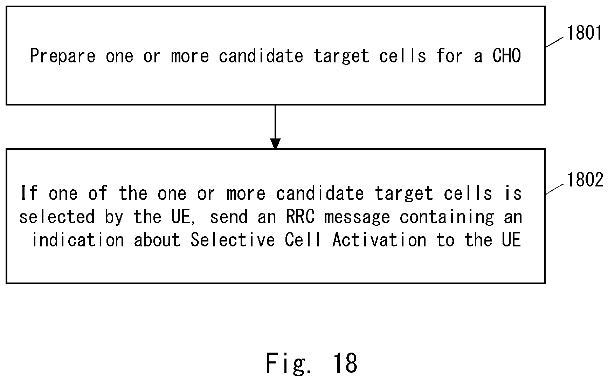

In the third implementation, the selected candidate target node 7, which provides a candidate target cell selected by the UE 3 in response to a CHO execution condition being met, decides whether or not to perform, use, prepare, or recommend selective cell activation. The selected candidate target node 7 operates as shown in Fig. 18. In step 1801, the candidate target node 7 prepares one or more candidate target cells for the UE 3 for a CHO. In step 1801, the candidate target node 7 may exchange signaling with the source node 6 in the same manner as an existing CHO. In particular, the candidate target node 7 may receive a CHO request message from the source node 6 and send a CHO request acknowledge message to the source node 6.

In step 1802, if one of the one or more candidate target cells has been selected by the UE 3, the candidate target node 7 transmits to the UE 3 an RRC message containing an indication about selective cell activation. The RRC message may be an RRC Reconfiguration message. The indication indicates to the UE 3 that selective cell activation is requested or recommended for a subsequent CHO after the CHO in question. The subsequent CHO may be a CHO to one or more other candidate target cells that were prepared for the CHO by the selected candidate target node 7 but were not selected by the UE 3. The indication about selective cell activation may be referred to as, but not limited to, "Selective cell activation indication", "CHO kept indication", "Store CHO indication", or "Keep unused CHO configuration indication".

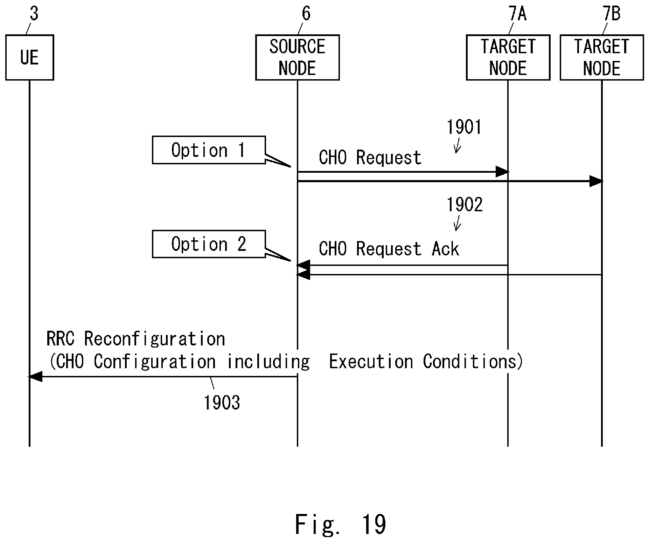

Fig. 19 shows an example of signaling during the CHO preparation phase of a CHO procedure. In step 1901, the source node 6 sends a CHO Request message to each of one or more candidate target nodes 7 (e.g., 7A and 7B). The CHO Request message includes a list of candidate target cells. The list in question indicates one or more candidate target cells proposed by the source node 6. The CHO Request message may be a Handover Request message containing a Conditional Handover Information Request IE.

In step 1902, each candidate target node 7 sends a CHO Request Acknowledge message to the source node 6. The CHO Request Acknowledge message includes a configuration for each of one or more candidate target cells prepared by the candidate target node 7. As previously described, the configuration of each candidate target cell may be a radio resource configuration or an RRC Reconfiguration message. The CHO Request Acknowledge message may be a Handover Request Acknowledge message containing a Conditional Handover Information Acknowledge.

In step 1903, the source node 6 transmits an RRC Reconfiguration message containing the CHO configuration to the UE 3. The CHO configuration includes the configurations of the candidate target cells generated by the candidate target node 7 and the CHO execution conditions generated by the source node 6.

In the first implementation described above, the source node 6 includes an indication of selective cell activation in the CHO Request message (step 1901), as shown in Fig. 19 as Option 1. The candidate target node 7 may include an indication of whether or not selective cell activation is acceptable in the CHO Request Acknowledge message (step 1902).

In the second implementation described above, the candidate target node 7 includes an indication of selective cell activation in the CHO Request Acknowledge message (step 1902), as shown in Fig. 19 as Option 2.

In each of the first and second implementations, the RRC Reconfiguration message in step 1903 may include an indication about selective cell activation. In other words, the source node 6 may inform the UE 3 via the RRC Reconfiguration message in step 1903 that selective cell activation is requested, recommended, or available.

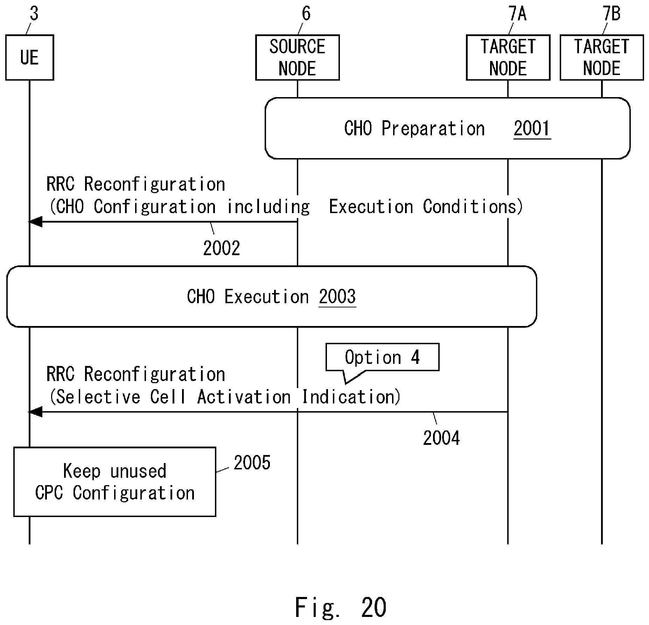

Fig. 20 shows an example of signaling for a CHO procedure for the third implementation described above. In step 2001, the source node 6 and one or more target nodes 7 prepare a CHO. In step 2002, the source node 6 transmits an RRC Reconfiguration message containing the CHO configuration to the UE 3. The RRC Reconfiguration message in step 2002 indicates the CHO. In addition, the RRC Reconfiguration message may indicate to the UE 3 that selective cell activation is planned, expected, or possible for a subsequent CHO after the CHO in question.

In step 2003, if the execution condition for one of the prepared candidate target cells is fulfilled, the UE 3 executes a CHO by applying the configuration of the selected candidate target cell. In the example in Fig. 20, the UE 3 selects one of the one or more candidate target cells prepared by the candidate target node 7A. Note that after the CHO execution condition is satisfied, the UE 3 maintains or retains the CHO execution conditions associated with the configurations of one or more other candidate target cells without releasing them. The UE 3 may selectively maintain or retain only the configurations of one or more other candidate target cells prepared by the selected candidate target node 7A. The UE 3 may operate in this manner if the RRC Reconfiguration message in step 2002 indicates that selective cell activation is planned, predicted, or possible.

In step 2004, the selected candidate target node 7A transmits an RRC message containing an indication of selective cell activation to the UE 3. The indication indicates to the UE 3 that selective cell activation is requested or recommended for a subsequent CHO after the CHO in question. Upon receipt of the indication in step 2004, the UE 3 maintains or retains the unused CHO configuration (i.e., the candidate target cell configurations) for a subsequent CHO (step 2005). The UE 3 may selectively maintain or retain only the configurations of one or more other candidate target cells prepared by the selected candidate target node 7A. The UE 3 may also maintain or retain the associated CHO execution conditions in addition to the unused candidate target cell configurations. If the UE 3 did not receive the indication in step 2004, it may release the provisionally maintained or retained CHO configuration.

The operations of the source node 6, the target node 7, and the UE 3 described above may be modified as follows. The source node 6 may inform the candidate target node 7 (e.g., 7A) selected by the UE 3 of the candidate target cells prepared by the other candidate target nodes 7 (e.g., 7B) to which selective cell activation is applied. Based on this information, the selected candidate target node 7 (e.g., 7A) may configure or update measurement configurations or CHO execution conditions or both. The selected candidate target node 7 (e.g., 7A) may transmit the updated measurement configurations and/or execution conditions to the UE 3.

The operations of the source node 6, the target node 7, and the UE 3 described above may be modified as follows. In some implementations, selective cell activation may be applied to or imposed on the last serving cell served by the source node 6. In this case, upon completion of the CHO, the UE 3 retains the configuration of the last serving cell for reuse in a subsequent CHO. The source node 6 may inform the candidate target node 7 that selective cell activation is to be applied to, or imposed on, the source cell. For example, the source node 6 may include an indication of the application of selective cell activation to the source cell in the CHO Request message of step 1902 of Fig. 19. This indication may be referred to as, for example, but not limited to, "Source cell kept".

The operations of the source node 6, the target node 7, and the UE 3 and the procedures described in this example embodiment can help clarify procedures for enabling selective cell activation for CHO. Specifically, they can clarify which node (e.g., source node or target node) makes the decision to use selective cell activation for CHO, and when this decision is made.

### Fourth Example Embodiment

This example embodiment provides an improved CHO for selective cell activation. This example embodiment relates to reusing multiple candidate target cell configurations for a CHO in a subsequent CHO. An example configuration of a radio communication system according to this example embodiment may be the same as the example shown in Fig. 3.

In the first implementation, the UE 3 maintains or retains all configurations of the multiple candidate target cell configurations for the CHO, except the selected one candidate target cell, for a subsequent CHO. As already described, the configuration of each candidate target cell may be a radio resource configuration or an RRC Reconfiguration message. The UE 3 may further maintain or retain the associated CHO execution conditions for a subsequent CHO. The UE 3 may update or modify one or more CHO execution conditions in response to instructions from the selected candidate target node 7 or autonomously. For example, the UE 3 may switch the reference cell in one or more CHO execution conditions (e.g., CondEvent A3 or CondEvent A5) from the source cell of the first CHO (i.e., the last serving cell 61 provided by the source node 6) to the selected target cell (e.g., the cell 71) provided by the selected candidate target node 7, i.e., the new serving cell.

In the second implementation, for a subsequent CHO after the first CHO, the UE 3 selectively maintains or retains only the configurations of one or more other candidate target cells provided by the selected candidate target node 7 that provides the candidate target cell selected in the first CHO. Accordingly, in the second implementation, the subsequent CHO is a CHO within the selected candidate target node 7. The configuration of each candidate target cell may be a radio resource configuration or an RRC Reconfiguration message. As in the first implementation, UE 3 may maintain or retain the associated CHO execution conditions for a subsequent CHO. The UE 3 may update or modify one or more CHO execution conditions in response to instructions from the selected candidate target node 7 or autonomously.

In the third implementation, the UE 3 selectively maintains, for a subsequent CHO, the configurations of one or more candidate target cells other than the candidate target cell selected in the first CHO, as specified by the source node 6 or one or more candidate target nodes 7. The configuration of each candidate target cell may be a radio resource configuration or an RRC Reconfiguration message. As in the first implementation, UE 3 may maintain or retain the associated CHO execution conditions for a subsequent CHO. The UE 3 may update or modify one or more CHO execution conditions in response to instructions from the selected candidate target node 7 or autonomously.

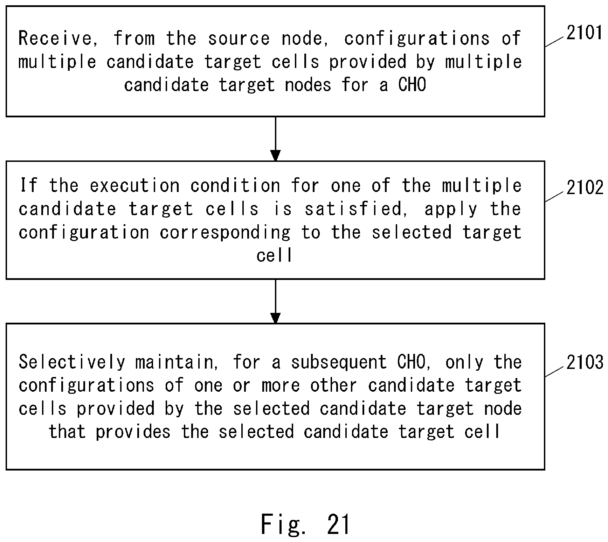

Fig. 21 shows an example of the operation of the UE 3 in the second implementation. In step 2101, the UE 3 receives from the source node 6 configurations of multiple candidate target cells provided by the multiple candidate target nodes 7 for a CHO. The UE 3 also receives from the source node 6 multiple CHO execution conditions associated with the multiple candidate target cells. In step 2102, the UE 3 evaluates the multiple CHO execution conditions. If the execution condition for one of the multiple candidate target cells is satisfied, the UE 3 applies the configuration corresponding to the selected candidate target cell (i.e., the candidate target cell whose execution condition is satisfied). In step 2103, the UE 3 selectively maintains, for a subsequent CHO, only the configurations of one or more other candidate target cells provided by the selected candidate target node 7 that provides the selected candidate target cell.

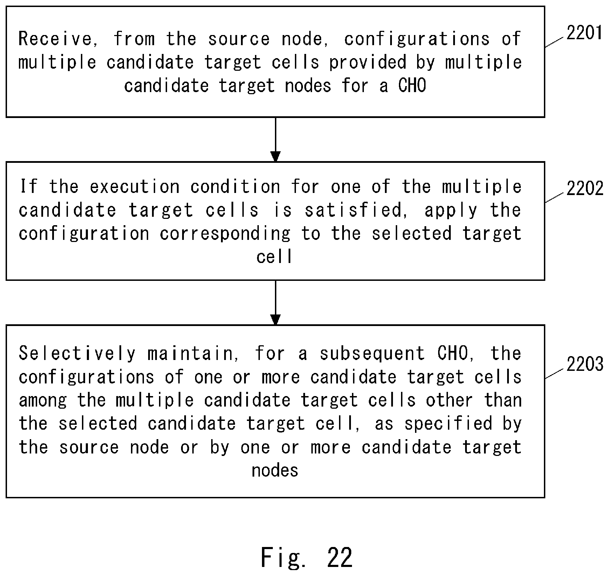

Fig. 22 shows an example of the operation of the UE 3 in the third implementation. Steps 2201 and 2202 are the same as steps 2101 and 2102 in Fig. 21. In step 2103, the UE 3 selectively maintains, for a subsequent CHO, the configurations of one or more candidate target cells among the plurality of candidate target cells other than the selected candidate target cell, as specified by the source node 6 or one or more candidate target nodes 7.

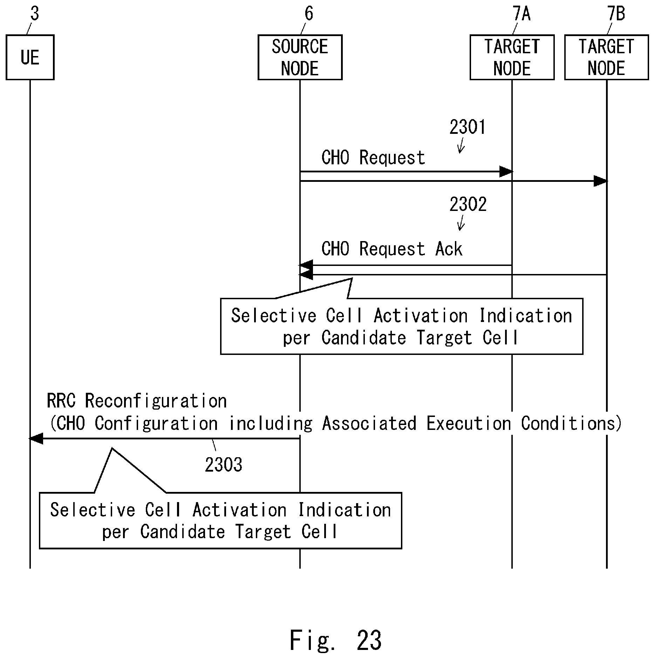

Fig. 23 shows an example of signaling in the CHO preparation phase of a CHO procedure for the third implementation described above. The basic role and structure of the messages in steps 2301 to 2303 are the same as those in steps 1901 to 1903 in Fig. 19. In step 2302, each candidate target node 7 includes an indication of selective cell activation per candidate target cell in the CHO Request Acknowledge message. In other words, each candidate target node 7 indicates to the source node 6 on a per candidate target cell basis whether selective cell activation is requested, recommended, or suggested. In step 2303, the source node 6 may include an indication of selective cell activation per candidate target cell in the RRC Reconfiguration message. In other words, the source node 6 may indicate to the UE 3 on a per candidate target cell basis whether selective cell activation is recommended, suggested, or available. Although not shown in Fig. 23, the source node 6 may indicate at least one candidate target cell of the candidate target node 7 (e.g., 7A) to which selective cell activation is applied, to another candidate target node 7 (e.g., 7B).

The operations of the source node 6, target node 7, and the UE 3 and the procedures described in this example embodiment can help clarify procedures for enabling selective cell activation. Specifically, they can clarify which of the multiple candidate target cell configurations for a CHO is to be reused by the UE 3 for a subsequent CHO.

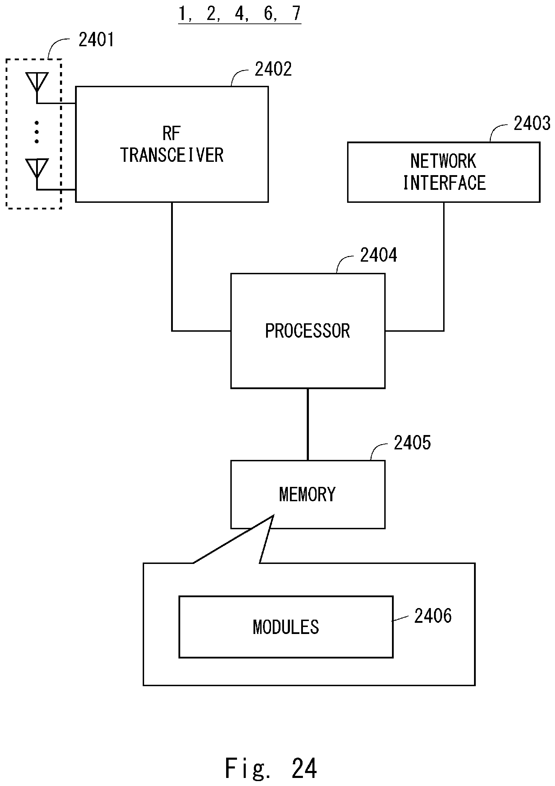

Example configurations of the RAN nodes 1, 2, 4, 6 and 7 and the UE 3 according to the above-described example embodiments are given below. Fig. 24 is a block diagram showing an example configuration of the RAN node 1 according to the example embodiments described above. The configuration of the RAN nodes 2, 4, 6 and 7 may be the same as that shown in Fig. 24. Referring to Fig. 24, the RAN node 1 includes a Radio Frequency transceiver 2401, a network interface 2403, a processor 2404, and a memory 2405. The RF transceiver 2401 performs analog RF signal processing to communicate with UEs including the UE 3. The RF transceiver 2401 may include a plurality of transceivers. The RF transceiver 2401 is coupled to an antenna array 2402 and the processor 2404. The RF transceiver 2401 receives modulation symbol data from the processor 2404, generates a transmission RF signal, and supplies the transmission RF signal to the antenna array 2402. The RF transceiver 2401 generates a baseband reception signal based on a reception RF signal received by the antenna array 2402 and supplies the baseband reception signal to the processor 2404. The RF transceiver 2401 may include an analog beamformer circuit for beamforming. The analog beamformer circuit includes, for example, a plurality of phase shifters and a plurality of power amplifiers.

The network interface 2403 is used to communicate with network nodes (e.g., the RAN nodes 2 and 4, and control and transfer nodes in the core network). The network interface 2403 may include, for example, a Network Interface Card (NIC) that complies with the IEEE 802.3 series.

The processor 2404 performs digital baseband signal processing (data-plane processing) and control-plane processing for radio communication. The processor 2404 may include a plurality of processors. For example, the processor 2404 may include a modem processor (e.g., Digital Signal Processor (DSP)) for performing the digital baseband signal processing and a protocol stack processor (e.g., Central Processing Unit (CPU) or Micro Processing Unit (MPU)) for performing the control-plane processing.

For example, digital baseband signal processing by the processor 2404 may include signal processing in the Service Data Adaptation Protocol (SDAP) layer, the Packet Data Convergence Protocol (PDCP) layer, the Radio Link Control (RLC) layer, the Medium Access Control (MAC) layer, and the Physical (PHY) layer. Control plane processing by the processor 2404 may include processing of Non-Access Stratum (NAS) messages, RRC messages, MAC Control Elements (CE), and Downlink Control Information (DCI).

The processor 2404 may include a digital beamformer module for beamforming. The digital beamformer module may include a Multiple Input Multiple Output (MIMO) encoder and precoder.

The memory 2405 is composed of a combination of a volatile memory and a non-volatile memory. The volatile memory is, for example, a Static Random Access Memory (SRAM), a Dynamic RAM (DRAM), or a combination thereof. The non-volatile memory may be a Mask Read Only Memory (MROM), an Electrically Erasable Programmable ROM (EEPROM), a flash memory, or a hard disk drive, or any combination thereof. The memory 2405 may include a storage located away from the processor 2404. In this case, the processor 2404 may access the memory 2405 via the network interface 2403 or an I/O interface not shown.

The memory 2405 may store one or more software modules (computer programs) 2406 including instructions and data for performing processing by the RAN node 1 described in the above example embodiments. In some implementations, the processor 2404 may be configured to load and execute the software module(s) 2406 from the memory 2405, thereby performing the processing of the RAN node 1 described in the above example embodiments.

When the RAN node 1 is a CU (e.g., eNB-CU or gNB-CU) or a CU-CP, the RAN node 1 does not need to include the RF transceiver 2401 (and the antenna array 2402).

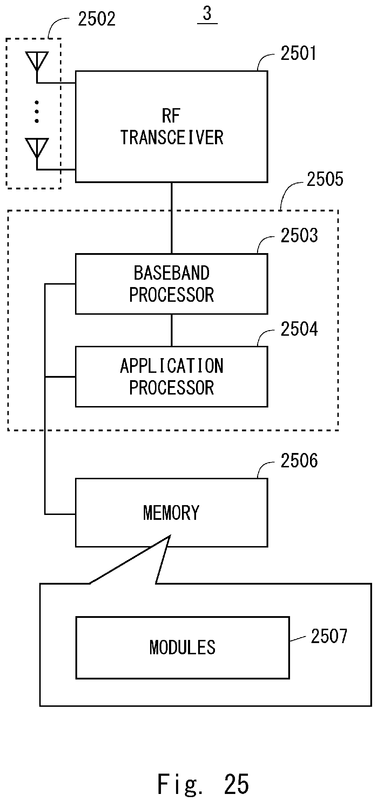

Fig. 25 is a block diagram showing an example configuration of the UE 3. The radio frequency (RF) transceiver 2501 performs analog RF signal processing to communicate with the RAN nodes 1, 2, 4, 6, and 7. The RF transceiver 2501 may include a plurality of transceivers. The analog RF signal processing performed by the RF transceiver 2501 includes frequency up-conversion, frequency downconversion, and amplification. The RF transceiver 2501 is coupled to the antenna array 2502 and the baseband processor 2503. The RF transceiver 2501 receives modulation symbol data (or OFDM symbol data) from the baseband processor 2503, generates a transmission RF signal, and supplies the transmission RF signal to the antenna array 2502. The RF transceiver 2501 generates a baseband reception signal based on the reception RF signal received by the antenna array 2502 and supplies the baseband reception signal to the baseband processor 2503. The RF transceiver 2501 may include an analog beamformer circuit for beamforming. The analog beamformer circuit includes, for example, a plurality of phase shifters and a plurality of power amplifiers.

The baseband processor 2503 performs digital baseband signal processing (data-plane processing) and control-plane processing for wireless communication. The digital baseband signal processing includes (a) data compression/decompression, (b) data segmentation/concatenation, (c) transmission format (transmission frame) composition/decomposition, (d) channel encoding/decoding, (e) modulation (i.e., symbol mapping)/demodulation, and (f) Inverse Fast Fourier Transform (IFFT) generation of OFDM symbol data (baseband OFDM signal). On the other hand, the control-plane processing includes communication management of layer 1 (e.g., transmission power control), layer 2 (e.g., radio resource management, and hybrid automatic repeat request (HARQ) processing), and layer 3 (e.g., signaling regarding attachment, mobility, and call management).

For example, the digital baseband signal processing performed by the baseband processor 2503 may include signal processing in the SDAP layer, PDCP layer, RLC layer, MAC layer, and PHY layer. The control-plane processing performed by the baseband processor 2503 may also include processing of Non-Access Stratum (NAS) protocols, RRC protocols, MAC CEs, and DCIs.

The baseband processor 2503 may perform MIMO encoding and precoding for beamforming.

The baseband processor 2503 may include a modem processor (e.g., DSP) that performs the digital baseband signal processing and a protocol stack processor (e.g., CPU or MPU) that performs the control-plane processing. In this case, the protocol stack processor performing the control-plane processing may be integrated with an application processor 2504 described later.

The application processor 2504 may also be referred to as a CPU, an MPU, a microprocessor, or a processor core. The application processor 2504 may include a plurality of processors (processor cores). The application processor 2504 loads a system software program (Operating System (OS)) and various application programs (e.g., a voice call application, a web browser, a mailer, a camera operation application, a music player application) from a memory 2506 or from another memory (not shown) and executes these programs, thereby providing various functions of the UE 3.

In some implementations, as represented by the dashed line (2505) in Fig. 25, the baseband processor 2503 and the application processor 2504 may be integrated on a single chip. In other words, the baseband processor 2503 and the application processor 2504 may be implemented in a single System on Chip (SoC) device 2505. A SoC device may be referred to as a system Large Scale Integration (LSI) or a chipset.

The memory 2506 is a volatile memory or a non-volatile memory, or a combination thereof. The memory 2506 may include a plurality of physically independent memory devices. The volatile memory is, for example, SRAM, DRAM, or a combination thereof. The non-volatile memory may be MROM, an EEPROM, a flash memory, a hard disk drive, or any combination thereof. The memory 2506 may include, for example, an external memory device that can be accessed by the baseband processor 2503, the application processor 2504, or the SoC 2505. The memory 2506 may include an internal memory device that is integrated into the baseband processor 2503, the application processor 2504, or the SoC 2505. Further, the memory 2506 may include a memory in a Universal Integrated Circuit Card (UICC).

The memory 2506 may store one or more software modules (computer programs) 2507 including instructions and data for processing by the UE 3 described in the above example embodiments. In some implementations, the baseband processor 2503 or the application processor 2504 may load the software module(s) 2507 from the memory 2506 and execute the loaded software module(s) 2507, thereby performing the processing of the UE 3 described in the above example embodiments with reference to the drawings.

The control plane processing and operations performed by the UE 3 described in the above example embodiments may be performed by elements other than the RF transceiver 2501 and the antenna array 2502, i.e., by the memory 2506 storing the software modules 2507 and one or both of the baseband processor 2503 and the application processor 2504.

As described using Figs. 24 and 25, each of the processors in the RAN nodes 1, 2, 4, 6 and 7, and UE 3 according to the above-described example embodiments can execute one or more programs, containing a set of instructions, to cause a computer to perform an algorithm described with reference to the drawings. Each of these programs contains a set of instructions (or software codes) that, when loaded into a computer, causes the computer to perform one or more of the functions described in the example embodiments. Each of these programs may be stored in a non-transitory computer readable medium or a tangible storage medium. By way of example, and not limitation, non-transitory computer readable media or tangible storage media can include a random-access memory (RAM), a read-only memory (ROM), a flash memory, a solid-state drive (SSD) or other memory technologies, CD-ROM, digital versatile disk (DVD), Blu-ray (registered mark) disc or other optical disk storage, magnetic cassettes, magnetic tape, magnetic disk storage or other magnetic storage devices. Each program may be transmitted on a transitory computer readable medium or a communication medium. By way of example, and not limitation, transitory computer readable media or communication media can include electrical, optical, acoustical, or other form of propagated signals.

The example embodiments described above are merely examples of applications of the technical ideas obtained by the inventors. These technical ideas are not limited to the example embodiments described above, and various modifications can be made thereto.

For example, the whole or part of the example embodiments disclosed above can be described as, but not limited to, the following supplementary notes.

### (Supplementary Note 1)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to send a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

### (Supplementary Note 2)

The RAN node according to Supplementary Note 1, wherein the at least one processor is configured to determine whether the configurations of the one or more candidate PSCells are to be maintained by the UE for the subsequent conditional PSCell change.

### (Supplementary Note 3)

The RAN node according to Supplementary Note 1 or 2, wherein the control message is an SN Addition Request message.

### (Supplementary Note 4)

The RAN node according to any one of Supplementary Notes 1 to 3, wherein
the first conditional mobility is a conditional Secondary Node (SN) change or an inter-SN PSCell change, and
the at least one processor is configured to indicate to the candidate SN, via the control message or another control message, that a source PSCell of the first conditional mobility is to be one of candidate PSCells in the subsequent conditional PSCell change.

### (Supplementary Note 5)

The RAN node according to any one of Supplementary Notes 1 to 4, wherein
the first conditional mobility is a conditional Secondary Node (SN) change or an inter-SN PSCell change, and
the at least one processor is configured to indicate to a source SN providing a source PSCell of the first conditional mobility that the source PSCell is to be one of candidate PSCells in the subsequent conditional PSCell change.

### (Supplementary Note 6)

A method performed by a Radio Access Network (RAN) node configured to operate as a Master Node (MN) associated with a Master Cell Group (MCG) in dual connectivity for a User Equipment (UE), the method comprising:
sending a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

### (Supplementary Note 7)

A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
sending a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

### (Supplementary Note 8)

A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to send a control message to a Master Node (MN) of the dual connectivity, wherein
the control message indicates one or more candidate Primary Secondary Cell Group (SCG) Cells (PSCells) recommended by the source SN for a first conditional PSCell change for the UE, and
the control message indicates that a mode of operation is recommended in which configurations of the one or more candidate PSCells to be provided to the UE for the first PSCell change are reused by the UE for a subsequent conditional PSCell change after the first PSCell change.

### (Supplementary Note 9)

The RAN node according to Supplementary Note 8, wherein the at least one processor is configured to determine whether the configurations of the one or more candidate PSCells are to be maintained by the UE for the subsequent conditional PSCell change.

### (Supplementary Note 10)

The RAN node according to Supplementary Note 8 or 9, wherein the control message is an SN Change Required message.

### (Supplementary Note 11)

A method performed by a Radio Access Network (RAN) node configured to operate as a source Secondary Node (SN) associated with a Secondary Cell Group (SCG) in dual connectivity for a User Equipment (UE), the method comprising:
sending a control message to a Master Node (MN) of the dual connectivity, wherein
the control message indicates one or more candidate Primary Secondary Cell Group (SCG) Cells (PSCells) recommended by the source SN for a first conditional PSCell change for the UE, and
the control message indicates that a mode of operation is recommended in which configurations of the one or more candidate PSCells to be provided to the UE for the first PSCell change are reused by the UE for a subsequent conditional PSCell change after the first PSCell change.

### (Supplementary Note 12)

A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to receive a first control message from a Master Node (MN) of the dual connectivity and to send a second control message to the MN in response to the first control message, wherein
the first control message indicates that for a first conditional mobility with addition or change of a primary secondary cell group (SCG) cell (PSCell) for the UE, one or more candidate PSCells are to be prepared,
the second control message indicates at least one candidate PSCell prepared by the candidate SN among the one or more candidate PSCells, and
the second control message indicates that a mode of operation is recommended in which a configuration of the at least one candidate PSCell to be provided to the UE for the first conditional mobility is reused by the UE for a subsequent conditional PSCell change after the first conditional mobility.

### (Supplementary Note 13)

The RAN node according to Supplementary Note 12, wherein the at least one processor is configured to determine whether the configuration of the at least one candidate PSCell is to be maintained by the UE for the subsequent conditional PSCell change.

### (Supplementary Note 14)

The RAN node according to Supplementary Note 12 or 13, wherein the first control message is an SN Addition Request message and the second control message is an SN Addition Request Acknowledge message.

### (Supplementary Note 15)

A method performed by a Radio Access Network (RAN) node configured to operate as a candidate Secondary Node (SN) associated with a Secondary Cell Group (SCG) in dual connectivity for a User Equipment (UE), the method comprising:
receiving a first control message from a Master Node (MN) of the dual connectivity; and
sending a second control message to the MN in response to the first control message, wherein
the first control message indicates that for a first conditional mobility with addition or change of a primary secondary cell group (SCG) cell (PSCell) for the UE, one or more candidate PSCells are to be prepared,
the second control message indicates at least one candidate PSCell prepared by the candidate SN among the one or more candidate PSCells, and
the second control message indicates that a mode of operation is recommended in which a configuration of the at least one candidate PSCell to be provided to the UE for the first conditional mobility is reused by the UE for a subsequent conditional PSCell change after the first conditional mobility.

### (Supplementary Note 16)

A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
   prepare one or more candidate Primary Secondary Cell Group (SCG) Cells (PSCells) in a first conditional mobility with addition or change of a PSCell for the UE; and
   transmit an SN Radio Resource Control (RRC) message to the UE when one of the one or more candidate PSCells is selected by the UE,
wherein the SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

### (Supplementary Note 17)

The RAN node according to Supplementary Note 16, wherein the at least one processor is configured to determine whether the configurations of the one or more other candidate PSCells are to be maintained by the UE for the subsequent conditional PSCell change.

### (Supplementary Note 18)

A method performed by a Radio Access Network (RAN) node configured to operate as a candidate Secondary Node (SN) associated with a Secondary Cell Group (SCG) in dual connectivity for a User Equipment (UE), the method comprising:
preparing one or more candidate Primary Secondary Cell Group (SCG) Cells (PSCells) in a first conditional mobility with addition or change of a PSCell for the UE; and
transmitting an SN Radio Resource Control (RRC) message to the UE when one of the one or more candidate PSCells is selected by the UE,
wherein the SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

### (Supplementary Note 19)

A radio access network (RAN) node configured to operate as a source node for a conditional handover of a User Equipment (UE), the RAN node comprising:
at least one memory; and
at least one processor coupled to the at least one memory and configured to send a control message to a candidate target node, wherein
the control message indicates that one or more candidate target cells are to be prepared by the candidate target node for a first conditional handover of the UE, and
the control message indicates that a mode of operation is recommended in which configurations of the one or more candidate target cells to be provided to the UE for the first conditional handover are reused by the UE for a subsequent second conditional handover after the first conditional handover.

### (Supplementary Note 20)

The RAN node according to Supplementary Note 19, wherein the at least one processor is configured to determine whether the configurations of the one or more candidate target cells are to be maintained by the UE for the second conditional handover.

### (Supplementary Note 21)

A method performed by a Radio Access Network (RAN) node configured to operate as a source node for a conditional handover of a User Equipment (UE), the method comprising:
sending a control message to a candidate target node, wherein
the control message indicates that one or more candidate target cells are to be prepared by the candidate target node for a first conditional handover of the UE, and
the control message indicates that a mode of operation is recommended in which configurations of the one or more candidate target cells to be provided to the UE for the first conditional handover are reused by the UE for a subsequent second conditional handover after the first conditional handover.

### (Supplementary Note 22)

A Radio Access Network (RAN) node configured to operate as a candidate target node for a conditional handover of a User Equipment (UE), the RAN node comprising:
at least one memory; and
at least one processor coupled to the at least one memory and configured to receive a first control message from a source node and to send a second control message to the source node in response to the first control message, wherein
the first control message indicates that one or more candidate target cells are to be prepared for a first conditional handover for the UE,
the second control message indicates at least one candidate target cell prepared by the source node among the one or more candidate target cells, and
the second control message indicates that a mode of operation is recommended in which a configuration of the at least one candidate target cell to be provided to the UE for the first conditional handover is reused by the UE for a subsequent second conditional handover after the first conditional handover.

### (Supplementary Note 23)

The RAN node according to Supplementary Note 22, wherein the at least one processor is configured to determine whether the configurations of the one or more candidate target cells are to be maintained by the UE for the second conditional handover.

### (Supplementary Note 24)

A method performed by a Radio Access Network (RAN) node configured to operate as a candidate target node for a conditional handover of a User Equipment (UE), the method comprising:
receiving a first control message from a source node; and
sending a second control message to the source node in response to the first control message, wherein
the first control message indicates that one or more candidate target cells are to be prepared for a first conditional handover for the UE,
the second control message indicates at least one candidate target cell prepared by the source node among the one or more candidate target cells, and
the second control message indicates that a mode of operation is recommended in which a configuration of the at least one candidate target cell to be provided to the UE for the first conditional handover is reused by the UE for a subsequent second conditional handover after the first conditional handover.

### (Supplementary Note 25)

A Radio Access Network (RAN) node configured to operate as a candidate target node for a conditional handover of a User Equipment (UE), the RAN node comprising:
at least one memory; and
at least one processor coupled to the at least one memory and configured to:
   prepare one or more candidate target cells for a first conditional handover of the UE; and
   transmit a Radio Resource Control (RRC) message to the UE when one of the one or more candidate target cells is selected by the UE,
wherein the RRC message indicates that a mode of operation is recommended in which configurations of one or more other candidate target cells, other than the selected candidate target cells, prepared for the first conditional handover are reused by the UE for a subsequent second conditional handover after the first conditional handover.

### (Supplementary Note 26)

The RAN node according to Supplementary Note 25, wherein the at least one processor is configured to determine whether the configurations of the one or more other candidate target cells are to be maintained by the UE for the second conditional handover.

### (Supplementary Note 27)

A method performed by a Radio Access Network (RAN) node configured to operate as a candidate target node for a conditional handover of a User Equipment (UE), the method comprising:
preparing one or more candidate target cells for a first conditional handover of the UE; and
transmitting a Radio Resource Control (RRC) message to the UE when one of the one or more candidate target cells is selected by the UE,
wherein the RRC message indicates that a mode of operation is recommended in which configurations of one or more other candidate target cells, other than the selected candidate target cells, prepared for the first conditional handover are reused by the UE for a subsequent second conditional handover after the first conditional handover.

### (Supplementary Note 28)

A User Equipment (UE) comprising:
at least one memory; and
at least one processor coupled to the at least one memory and configured to:
   receive, from a Master Node (MN), configurations of a plurality of candidate Primary Secondary Cell Group (SCG) Cells (PSCells) provided by a plurality of candidate Secondary Nodes (SNs) for a first conditional mobility with addition or change of a PSCell for the UE;
   if an execution condition for one of the plurality of candidate PSCells is met, apply the configuration corresponding to the one candidate PSCell; and
   selectively maintain, for a subsequent conditional PSCell change after the first conditional mobility, only the configurations of one or more other candidate PSCells provided by a selected candidate SN providing the one candidate PSCell.

### (Supplementary Note 29)

A method performed by a User Equipment (UE), the method comprising:
receiving, from a Master Node (MN), configurations of a plurality of candidate Primary Secondary Cell Group (SCG) Cells (PSCells) provided by a plurality of candidate Secondary Nodes (SNs) for a first conditional mobility with addition or change of a PSCell for the UE;
if an execution condition for one of the plurality of candidate PSCells is met, applying the configuration corresponding to the one candidate PSCell; and
selectively maintaining, for a subsequent conditional PSCell change after the first conditional mobility, only the configurations of one or more other candidate PSCells provided by a selected candidate SN providing the one candidate PSCell.

### (Supplementary Note 30)

A User Equipment (UE) comprising:
at least one memory; and
at least one processor coupled to the at least one memory and configured to:
   receive, from a Master Node (MN), configurations of a plurality of candidate Primary Secondary Cell Group (SCG) Cells (PSCells) for a first conditional mobility with addition or change of a PSCell for the UE;
   if an execution condition for one of the plurality of candidate PSCells is met, apply the configuration corresponding to the one candidate PSCell; and
   selectively maintain, for a subsequent conditional PSCell change after the first conditional mobility, the configurations of one or more candidate PSCells among the plurality of candidate PSCells other than the one candidate PSCell, as specified by the MN or one or more candidate Secondary Nodes (SNs).

### (Supplementary Note 31)

A method performed by a User Equipment (UE), the method comprising:
receiving, from a Master Node (MN), configurations of a plurality of candidate Primary Secondary Cell Group (SCG) Cells (PSCells) for a first conditional mobility with addition or change of a PSCell for the UE;
if an execution condition for one of the plurality of candidate PSCells is met, applying the configuration corresponding to the one candidate PSCell; and
selectively maintaining, for a subsequent conditional PSCell change after the first conditional mobility, the configurations of one or more candidate PSCells among the plurality of candidate PSCells other than the one candidate PSCell, as specified by the MN or one or more candidate Secondary Nodes (SNs).

### (Supplementary Note 32)

A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
   indicate to a Master Node (MN) one or more candidate Primary Secondary Cell Group (SCG) Cells (PSCells) prepared by the candidate SN for a first conditional mobility involving addition or change of a PSCell for the UE; and
   indicate to the MN at least one candidate PSCell among the one or more candidate PSCells whose configuration is to be maintained for a subsequent conditional PSCell change after the first conditional mobility.

### (Supplementary Note 33)

A method performed by a Radio Access Network (RAN) node configured to operate as a candidate Secondary Node (SN) associated with a Secondary Cell Group (SCG) in dual connectivity for a User Equipment (UE), the method comprising:
indicating to a Master Node (MN) one or more candidate Primary Secondary Cell Group (SCG) Cells (PSCells) prepared by the candidate SN for a first conditional mobility involving addition or change of a PSCell for the UE; and
indicating to the MN at least one candidate PSCell among the one or more candidate PSCells whose configuration is to be maintained for a subsequent conditional PSCell change after the first conditional mobility.

### (Supplementary Note 34)

A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to receive a control message from a first candidate Secondary Node (SN) of a first conditional mobility with addition or change of a Primary Secondary Cell Group (SCG) Cell (PSCell) for the UE, wherein
the control message indicates one or more candidate PSCells prepared by the first candidate SN for the first conditional mobility, and
the control message indicates at least one candidate PSCell among the one or more candidate PSCells whose configuration is to be maintained for a subsequent conditional PSCell change after the first conditional mobility.

### (Supplementary Note 35)

The RAN node according to Supplementary Note 34, wherein the at least one processor is configured to indicate the at least one candidate PSCell to the UE.

### (Supplementary Note 36)

The RAN node according to Supplementary Note 34 or 35, wherein the at least one processor is configured to indicate the at least one candidate PSCell to a second candidate SN of the first conditional mobility that is different from the first candidate SN.

### (Supplementary Note 37)

A method performed by a Radio Access Network (RAN) node configured to operate as a Master Node (MN) associated with a Master Cell Group (MCG) in dual connectivity for a User Equipment (UE), the method comprising:
receiving a control message from a first candidate Secondary Node (SN) of a first conditional mobility with addition or change of a Primary Secondary Cell Group (SCG) Cell (PSCell) for the UE, wherein
the control message indicates one or more candidate PSCells prepared by the first candidate SN for the first conditional mobility, and
the control message indicates at least one candidate PSCell among the one or more candidate PSCells whose configuration is to be maintained for a subsequent conditional PSCell change after the first conditional mobility.

### (Supplementary Note 38)

A User Equipment (UE) comprising:
at least one memory; and
at least one processor coupled to the at least one memory and configured to:
   receive, from a source node, configurations of a plurality of candidate target cells provided by a plurality of candidate target nodes for a first conditional handover for the UE;
   if an execution condition for one of the plurality of candidate target cells is met, apply the configuration corresponding to the one candidate target cell; and
   selectively maintain, for a subsequent second conditional handover after the first conditional handover, only the configurations of one or more other candidate target cells provided by a selected candidate target node providing the one candidate target cell.

### (Supplementary Note 39)

A method performed by a User Equipment (UE), the method comprising:
receiving, from a source node, configurations of a plurality of candidate target cells provided by a plurality of candidate target nodes for a first conditional handover for the UE;
if an execution condition for one of the plurality of candidate target cells is met, applying the configuration corresponding to the one candidate target cell; and
selectively maintaining, for a subsequent second conditional handover after the first conditional handover, only the configurations of one or more other candidate target cells provided by a selected candidate target node providing the one candidate target cell.

### (Supplementary Note 40)

A User Equipment (UE) comprising:
at least one memory; and
at least one processor coupled to the at least one memory and configured to:
   receive, from a source node, configurations of a plurality of candidate target cells for a first conditional handover for the UE;
   if an execution condition for one of the plurality of candidate target cells is met, apply the configuration corresponding to the one candidate target cell; and
   selectively maintain, for a subsequent second conditional handover after the first conditional handover, the configurations of one or more candidate target cells among the plurality of candidate target cells other than the one target cell, as specified by the source node or one or more candidate nodes.

### (Supplementary Note 41)

A method performed by a User Equipment (UE), the method comprising:
receiving, from a source node, configurations of a plurality of candidate target cells for a first conditional handover for the UE;
if an execution condition for one of the plurality of candidate target cells is met, applying the configuration corresponding to the one candidate target cell; and
selectively maintaining, for a subsequent second conditional handover after the first conditional handover, the configurations of one or more candidate target cells among the plurality of candidate target cells other than the one target cell, as specified by the source node or one or more candidate nodes.

### (Supplementary Note 42)

A Radio Access Network (RAN) node configured to operate as a candidate target node for a conditional handover of a User Equipment (UE), the RAN node comprising:
at least one memory; and
at least one processor coupled to the at least one memory and configured to:
   indicate to a source node one or more candidate target cells prepared by the candidate target node for a first conditional handover for the UE; and
   indicate to the source node at least one candidate target cell among the one or more candidate target cells whose configuration is to be maintained for a subsequent second conditional handover after the first conditional handover.

### (Supplementary Note 43)

A method performed by a Radio Access Network (RAN) node configured to operate as a candidate target node for a conditional handover of a User Equipment (UE), the method comprising:
indicating to a source node one or more candidate target cells prepared by the candidate target node for a first conditional handover for the UE; and
indicating to the source node at least one candidate target cell among the one or more candidate target cells whose configuration is to be maintained for a subsequent second conditional handover after the first conditional handover.

### (Supplementary Note 44)

A radio access network (RAN) node configured to operate as a source node for a conditional handover of a User Equipment (UE), the RAN node comprising:
at least one memory; and
at least one processor coupled to the at least one memory and configured to receive a control message from a first candidate target node of a first conditional handover for the UE, wherein
the control message indicates one or more candidate target cells prepared by the first candidate target node for the first conditional handover, and
the control message indicates at least one candidate target cell among the one or more candidate target cells whose configuration is to be maintained for a subsequent second conditional handover after the first conditional handover.

### (Supplementary Note 45)

A method performed by a Radio Access Network (RAN) node configured to operate as a source node for a conditional handover of a User Equipment (UE), the method comprising:
receiving a control message from a first candidate target node of a first conditional handover for the UE, wherein
the control message indicates one or more candidate target cells prepared by the first candidate target node for the first conditional handover, and
the control message indicates at least one candidate target cell among the one or more candidate target cells whose configuration is to be maintained for a subsequent second conditional handover after the first conditional handover.

This application is based upon and claims the benefit of priority from Japanese Patent Application No. 2021-215149, filed on December 28, 2021, the disclosure of which is incorporated herein in its entirety by reference.

### Reference Signs List

- 1: Master Node (MN)
- 2: Source Secondary Node (S-SN)
- 3: User Equipment (UE)
- 4: Target Secondary Node (T-SN)
- 6: Source Node
- 7: Target Node
- 2404: Processor
- 2405: Memory
- 2406: Modules
- 2503: Baseband Processor
- 2504: Application Processor
- 2506: Memory
- 2507: Modules

## Claims

1. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to send a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

2. The RAN node according to claim 1, wherein the at least one processor is configured to determine whether the configurations of the one or more candidate PSCells are to be maintained by the UE for the subsequent conditional PSCell change.

3. The RAN node according to claim 1 or 2, wherein the control message is an SN Addition Request message.

4. The RAN node according to any one of claims 1 to 3, wherein
the first conditional mobility is a conditional Secondary Node (SN) change or an inter-SN PSCell change, and
the at least one processor is configured to indicate to the candidate SN, via the control message or another control message, that a source PSCell of the first conditional mobility is to be one of candidate PSCells in the subsequent conditional PSCell change.

5. The RAN node according to any one of claims 1 to 4, wherein
the first conditional mobility is a conditional Secondary Node (SN) change or an inter-SN PSCell change, and
the at least one processor is configured to indicate to a source SN providing a source PSCell of the first conditional mobility that the source PSCell is to be one of candidate PSCells in the subsequent conditional PSCell change.

6. A method performed by a Radio Access Network (RAN) node configured to operate as a Master Node (MN) associated with a Master Cell Group (MCG) in dual connectivity for a User Equipment (UE), the method comprising:
sending a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

7. A non-transitory computer readable medium storing a program for causing a computer to perform a method for a Radio Access Network (RAN) node configured to operate as a Master Node (MN) associated with a Master Cell Group (MCG) in dual connectivity for a User Equipment (UE), the method comprising:
sending a control message to a candidate Secondary Node (SN), wherein
the control message indicates that for a first conditional mobility with addition or change of a primary secondary cell group (SCG) cell (PSCell) for the UE, one or more candidate PSCells are to be prepared by the candidate SN, and
the control message indicates that a mode of operation is recommended in which configurations of the one or more candidate PSCells to be provided to the UE for the first conditional mobility are reused by the UE for a subsequent conditional PSCell change after the first conditional mobility.

8. A Radio Access Network (RAN) node configured to operate as a source Secondary Node (SN) associated with a Secondary Cell Group (SCG) in dual connectivity for a User Equipment (UE), the RAN node comprising:
at least one memory; and
at least one processor coupled to the at least one memory and configured to send a control message to a Master Node (MN) of the dual connectivity, wherein
the control message indicates one or more candidate Primary Secondary Cell Group (SCG) Cells (PSCells) recommended by the source SN for a first conditional PSCell change for the UE, and
the control message indicates that a mode of operation is recommended in which configurations of the one or more candidate PSCells to be provided to the UE for the first PSCell change are reused by the UE for a subsequent conditional PSCell change after the first PSCell change.

9. The RAN node according to claim 8, wherein the at least one processor is configured to determine whether the configurations of the one or more candidate PSCells are to be maintained by the UE for the subsequent conditional PSCell change.

10. The RAN node according to claim 8 or 9, wherein the control message is an SN Change Required message.

11. A method performed by a Radio Access Network (RAN) node configured to operate as a source Secondary Node (SN) associated with a Secondary Cell Group (SCG) in dual connectivity for a User Equipment (UE), the method comprising:
sending a control message to a Master Node (MN) of the dual connectivity, wherein
the control message indicates one or more candidate Primary Secondary Cell Group (SCG) Cells (PSCells) recommended by the source SN for a first conditional PSCell change for the UE, and
the control message indicates that a mode of operation is recommended in which configurations of the one or more candidate PSCells to be provided to the UE for the first PSCell change are reused by the UE for a subsequent conditional PSCell change after the first PSCell change.

12. A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to receive a first control message from a Master Node (MN) of the dual connectivity and to send a second control message to the MN in response to the first control message, wherein
the first control message indicates that for a first conditional mobility with addition or change of a primary secondary cell group (SCG) cell (PSCell) for the UE, one or more candidate PSCells are to be prepared,
the second control message indicates at least one candidate PSCell prepared by the candidate SN among the one or more candidate PSCells, and
the second control message indicates that a mode of operation is recommended in which a configuration of the at least one candidate PSCell to be provided to the UE for the first conditional mobility is reused by the UE for a subsequent conditional PSCell change after the first conditional mobility.

13. The RAN node according to claim 12, wherein the at least one processor is configured to determine whether the configuration of the at least one candidate PSCell is to be maintained by the UE for the subsequent conditional PSCell change.

14. The RAN node according to claim 12 or 13, wherein the first control message is an SN Addition Request message and the second control message is an SN Addition Request Acknowledge message.

15. A method performed by a Radio Access Network (RAN) node configured to operate as a candidate Secondary Node (SN) associated with a Secondary Cell Group (SCG) in dual connectivity for a User Equipment (UE), the method comprising:
receiving a first control message from a Master Node (MN) of the dual connectivity; and
sending a second control message to the MN in response to the first control message, wherein
the first control message indicates that for a first conditional mobility with addition or change of a primary secondary cell group (SCG) cell (PSCell) for the UE, one or more candidate PSCells are to be prepared,
the second control message indicates at least one candidate PSCell prepared by the candidate SN among the one or more candidate PSCells, and
the second control message indicates that a mode of operation is recommended in which a configuration of the at least one candidate PSCell to be provided to the UE for the first conditional mobility is reused by the UE for a subsequent conditional PSCell change after the first conditional mobility.

16. A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
prepare one or more candidate Primary Secondary Cell Group (SCG) Cells (PSCells) in a first conditional mobility with addition or change of a PSCell for the UE; and
transmit an SN Radio Resource Control (RRC) message to the UE when one of the one or more candidate PSCells is selected by the UE,
wherein the SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

17. The RAN node according to claim 16, wherein the at least one processor is configured to determine whether the configurations of the one or more other candidate PSCells are to be maintained by the UE for the subsequent conditional PSCell change.

18. A method performed by a Radio Access Network (RAN) node configured to operate as a candidate Secondary Node (SN) associated with a Secondary Cell Group (SCG) in dual connectivity for a User Equipment (UE), the method comprising:
preparing one or more candidate Primary Secondary Cell Group (SCG) Cells (PSCells) in a first conditional mobility with addition or change of a PSCell for the UE; and
transmitting an SN Radio Resource Control (RRC) message to the UE when one of the one or more candidate PSCells is selected by the UE,
wherein the SN RRC message indicates that a mode of operation is recommended in which configurations of one or more other candidate PSCells, other than the selected candidate PSCell, prepared for the first conditional mobility are reused by the UE for a subsequent conditional SN change after the first conditional mobility.

19. A radio access network (RAN) node configured to operate as a source node for a conditional handover of a User Equipment (UE), the RAN node comprising:
at least one memory; and
at least one processor coupled to the at least one memory and configured to send a control message to a candidate target node, wherein
the control message indicates that one or more candidate target cells are to be prepared by the candidate target node for a first conditional handover of the UE, and
the control message indicates that a mode of operation is recommended in which configurations of the one or more candidate target cells to be provided to the UE for the first conditional handover are reused by the UE for a subsequent second conditional handover after the first conditional handover.

20. The RAN node according to claim 19, wherein the at least one processor is configured to determine whether the configurations of the one or more candidate target cells are to be maintained by the UE for the second conditional handover.

21. A method performed by a Radio Access Network (RAN) node configured to operate as a source node for a conditional handover of a User Equipment (UE), the method comprising:
sending a control message to a candidate target node, wherein
the control message indicates that one or more candidate target cells are to be prepared by the candidate target node for a first conditional handover of the UE, and
the control message indicates that a mode of operation is recommended in which configurations of the one or more candidate target cells to be provided to the UE for the first conditional handover are reused by the UE for a subsequent second conditional handover after the first conditional handover.

22. A Radio Access Network (RAN) node configured to operate as a candidate target node for a conditional handover of a User Equipment (UE), the RAN node comprising:
at least one memory; and
at least one processor coupled to the at least one memory and configured to receive a first control message from a source node and to send a second control message to the source node in response to the first control message, wherein
the first control message indicates that one or more candidate target cells are to be prepared for a first conditional handover for the UE,
the second control message indicates at least one candidate target cell prepared by the source node among the one or more candidate target cells, and
the second control message indicates that a mode of operation is recommended in which a configuration of the at least one candidate target cell to be provided to the UE for the first conditional handover is reused by the UE for a subsequent second conditional handover after the first conditional handover.

23. The RAN node according to claim 22, wherein the at least one processor is configured to determine whether the configurations of the one or more candidate target cells are to be maintained by the UE for the second conditional handover.

24. A method performed by a Radio Access Network (RAN) node configured to operate as a candidate target node for a conditional handover of a User Equipment (UE), the method comprising:
receiving a first control message from a source node; and
sending a second control message to the source node in response to the first control message, wherein
the first control message indicates that one or more candidate target cells are to be prepared for a first conditional handover for the UE,
the second control message indicates at least one candidate target cell prepared by the source node among the one or more candidate target cells, and
the second control message indicates that a mode of operation is recommended in which a configuration of the at least one candidate target cell to be provided to the UE for the first conditional handover is reused by the UE for a subsequent second conditional handover after the first conditional handover.

25. A Radio Access Network (RAN) node configured to operate as a candidate target node for a conditional handover of a User Equipment (UE), the RAN node comprising:
at least one memory; and
at least one processor coupled to the at least one memory and configured to:
prepare one or more candidate target cells for a first conditional handover of the UE; and
transmit a Radio Resource Control (RRC) message to the UE when one of the one or more candidate target cells is selected by the UE,
wherein the RRC message indicates that a mode of operation is recommended in which configurations of one or more other candidate target cells, other than the selected candidate target cells, prepared for the first conditional handover are reused by the UE for a subsequent second conditional handover after the first conditional handover.

26. The RAN node according to claim 25, wherein the at least one processor is configured to determine whether the configurations of the one or more other candidate target cells are to be maintained by the UE for the second conditional handover.

27. A method performed by a Radio Access Network (RAN) node configured to operate as a candidate target node for a conditional handover of a User Equipment (UE), the method comprising:
preparing one or more candidate target cells for a first conditional handover of the UE; and
transmitting a Radio Resource Control (RRC) message to the UE when one of the one or more candidate target cells is selected by the UE,
wherein the RRC message indicates that a mode of operation is recommended in which configurations of one or more other candidate target cells, other than the selected candidate target cells, prepared for the first conditional handover are reused by the UE for a subsequent second conditional handover after the first conditional handover.

28. A User Equipment (UE) comprising:
at least one memory; and
at least one processor coupled to the at least one memory and configured to:
receive, from a Master Node (MN), configurations of a plurality of candidate Primary Secondary Cell Group (SCG) Cells (PSCells) provided by a plurality of candidate Secondary Nodes (SNs) for a first conditional mobility with addition or change of a PSCell for the UE;
if an execution condition for one of the plurality of candidate PSCells is met, apply the configuration corresponding to the one candidate PSCell; and
selectively maintain, for a subsequent conditional PSCell change after the first conditional mobility, only the configurations of one or more other candidate PSCells provided by a selected candidate SN providing the one candidate PSCell.

29. A method performed by a User Equipment (UE), the method comprising:
receiving, from a Master Node (MN), configurations of a plurality of candidate Primary Secondary Cell Group (SCG) Cells (PSCells) provided by a plurality of candidate Secondary Nodes (SNs) for a first conditional mobility with addition or change of a PSCell for the UE;
if an execution condition for one of the plurality of candidate PSCells is met, applying the configuration corresponding to the one candidate PSCell; and
selectively maintaining, for a subsequent conditional PSCell change after the first conditional mobility, only the configurations of one or more other candidate PSCells provided by a selected candidate SN providing the one candidate PSCell.

30. A User Equipment (UE) comprising:
at least one memory; and
at least one processor coupled to the at least one memory and configured to:
receive, from a Master Node (MN), configurations of a plurality of candidate Primary Secondary Cell Group (SCG) Cells (PSCells) for a first conditional mobility with addition or change of a PSCell for the UE;
if an execution condition for one of the plurality of candidate PSCells is met, apply the configuration corresponding to the one candidate PSCell; and
selectively maintain, for a subsequent conditional PSCell change after the first conditional mobility, the configurations of one or more candidate PSCells among the plurality of candidate PSCells other than the one candidate PSCell, as specified by the MN or one or more candidate Secondary Nodes (SNs).

31. A method performed by a User Equipment (UE), the method comprising:
receiving, from a Master Node (MN), configurations of a plurality of candidate Primary Secondary Cell Group (SCG) Cells (PSCells) for a first conditional mobility with addition or change of a PSCell for the UE;
if an execution condition for one of the plurality of candidate PSCells is met, applying the configuration corresponding to the one candidate PSCell; and
selectively maintaining, for a subsequent conditional PSCell change after the first conditional mobility, the configurations of one or more candidate PSCells among the plurality of candidate PSCells other than the one candidate PSCell, as specified by the MN or one or more candidate Secondary Nodes (SNs).

32. A Radio Access Network (RAN) node configured to operate as a candidate Secondary Node (SN) associated with a Secondary Cell Group (SCG) in dual connectivity for a User Equipment (UE), the RAN node comprising:
at least one memory; and
at least one processor coupled to the at least one memory and configured to:
indicate to a Master Node (MN) one or more candidate Primary Secondary Cell Group (SCG) Cells (PSCells) prepared by the candidate SN for a first conditional mobility involving addition or change of a PSCell for the UE; and
indicate to the MN at least one candidate PSCell among the one or more candidate PSCells whose configuration is to be maintained for a subsequent conditional PSCell change after the first conditional mobility.

33. A method performed by a Radio Access Network (RAN) node configured to operate as a candidate Secondary Node (SN) associated with a Secondary Cell Group (SCG) in dual connectivity for a User Equipment (UE), the method comprising:
indicating to a Master Node (MN) one or more candidate Primary Secondary Cell Group (SCG) Cells (PSCells) prepared by the candidate SN for a first conditional mobility involving addition or change of a PSCell for the UE; and
indicating to the MN at least one candidate PSCell among the one or more candidate PSCells whose configuration is to be maintained for a subsequent conditional PSCell change after the first conditional mobility.

34. A Radio Access Network (RAN) node configured to operate as a Master Node (MN) associated with a Master Cell Group (MCG) in dual connectivity for a User Equipment (UE), the RAN node comprising:
at least one memory; and
at least one processor coupled to the at least one memory and configured to receive a control message from a first candidate Secondary Node (SN) of a first conditional mobility with addition or change of a Primary Secondary Cell Group (SCG) Cell (PSCell) for the UE, wherein
the control message indicates one or more candidate PSCells prepared by the first candidate SN for the first conditional mobility, and
the control message indicates at least one candidate PSCell among the one or more candidate PSCells whose configuration is to be maintained for a subsequent conditional PSCell change after the first conditional mobility.

35. The RAN node according to claim 34, wherein the at least one processor is configured to indicate the at least one candidate PSCell to the UE.

36. The RAN node according to claim 34 or 35, wherein the at least one processor is configured to indicate the at least one candidate PSCell to a second candidate SN of the first conditional mobility that is different from the first candidate SN.

37. A method performed by a Radio Access Network (RAN) node configured to operate as a Master Node (MN) associated with a Master Cell Group (MCG) in dual connectivity for a User Equipment (UE), the method comprising:
receiving a control message from a first candidate Secondary Node (SN) of a first conditional mobility with addition or change of a Primary Secondary Cell Group (SCG) Cell (PSCell) for the UE, wherein
the control message indicates one or more candidate PSCells prepared by the first candidate SN for the first conditional mobility, and
the control message indicates at least one candidate PSCell among the one or more candidate PSCells whose configuration is to be maintained for a subsequent conditional PSCell change after the first conditional mobility.

38. A User Equipment (UE) comprising:
at least one memory; and
at least one processor coupled to the at least one memory and configured to:
receive, from a source node, configurations of a plurality of candidate target cells provided by a plurality of candidate target nodes for a first conditional handover for the UE;
if an execution condition for one of the plurality of candidate target cells is met, apply the configuration corresponding to the one candidate target cell; and
selectively maintain, for a subsequent second conditional handover after the first conditional handover, only the configurations of one or more other candidate target cells provided by a selected candidate target node providing the one candidate target cell.

39. A method performed by a User Equipment (UE), the method comprising:
receiving, from a source node, configurations of a plurality of candidate target cells provided by a plurality of candidate target nodes for a first conditional handover for the UE;
if an execution condition for one of the plurality of candidate target cells is met, applying the configuration corresponding to the one candidate target cell; and
selectively maintaining, for a subsequent second conditional handover after the first conditional handover, only the configurations of one or more other candidate target cells provided by a selected candidate target node providing the one candidate target cell.

40. A User Equipment (UE) comprising:
at least one memory; and
at least one processor coupled to the at least one memory and configured to:
receive, from a source node, configurations of a plurality of candidate target cells for a first conditional handover for the UE;
if an execution condition for one of the plurality of candidate target cells is met, apply the configuration corresponding to the one candidate target cell; and
selectively maintain, for a subsequent second conditional handover after the first conditional handover, the configurations of one or more candidate target cells among the plurality of candidate target cells other than the one target cell, as specified by the source node or one or more candidate nodes.

41. A method performed by a User Equipment (UE), the method comprising:
receiving, from a source node, configurations of a plurality of candidate target cells for a first conditional handover for the UE;
if an execution condition for one of the plurality of candidate target cells is met, applying the configuration corresponding to the one candidate target cell; and
selectively maintaining, for a subsequent second conditional handover after the first conditional handover, the configurations of one or more candidate target cells among the plurality of candidate target cells other than the one target cell, as specified by the source node or one or more candidate nodes.

42. A Radio Access Network (RAN) node configured to operate as a candidate target node for a conditional handover of a User Equipment (UE), the RAN node comprising:
at least one memory; and
at least one processor coupled to the at least one memory and configured to:
indicate to a source node one or more candidate target cells prepared by the candidate target node for a first conditional handover for the UE; and
indicate to the source node at least one candidate target cell among the one or more candidate target cells whose configuration is to be maintained for a subsequent second conditional handover after the first conditional handover.

43. A method performed by a Radio Access Network (RAN) node configured to operate as a candidate target node for a conditional handover of a User Equipment (UE), the method comprising:
indicating to a source node one or more candidate target cells prepared by the candidate target node for a first conditional handover for the UE; and
indicating to the source node at least one candidate target cell among the one or more candidate target cells whose configuration is to be maintained for a subsequent second conditional handover after the first conditional handover.

44. A radio access network (RAN) node configured to operate as a source node for a conditional handover of a User Equipment (UE), the RAN node comprising:
at least one memory; and
at least one processor coupled to the at least one memory and configured to receive a control message from a first candidate target node of a first conditional handover for the UE, wherein
the control message indicates one or more candidate target cells prepared by the first candidate target node for the first conditional handover, and
the control message indicates at least one candidate target cell among the one or more candidate target cells whose configuration is to be maintained for a subsequent second conditional handover after the first conditional handover.

45. A method performed by a Radio Access Network (RAN) node configured to operate as a source node for a conditional handover of a User Equipment (UE), the method comprising:
receiving a control message from a first candidate target node of a first conditional handover for the UE, wherein
the control message indicates one or more candidate target cells prepared by the first candidate target node for the first conditional handover, and
the control message indicates at least one candidate target cell among the one or more candidate target cells whose configuration is to be maintained for a subsequent second conditional handover after the first conditional handover.
